# EUROPEAN PATENT SPECIFICATION

(11) **EP 1 330 823 B1**
(45) Date of publication and mention of the grant of the patent: **21.11.2007**
(21) Application number: 01965519.0
(22) Date of filing: 17.09.2001
(51) Int. Cl.: G11B 9/00, G01B 7/34

(54) **AFM-BASED DATA STORAGE AND MICROSCOPY**
AUF RASTERKRAFTMIKROSKOPIE BASIERENDE DATENSPEICHERUNG UND MIKROSKOPIE
SYSTEME DE MICROSCOPIE ET DE STOCKAGE DE DONNEES BASEES SUR UN MICROSCOPE A FORCE ATOMIQUE

(30) Priority: 03.11.2000 EP 00123992
(43) Date of publication of application: 30.07.2003
(73) Proprietor: International Business Machines Corporation, Armonk, NY 10504 (US)
(72) Inventor: BINNIG, Gerd, K., CH-8832 Wollerau (CH); DESPONT, Michel, CH-8134 Adliswil (CH); VETTIGER, Peter, CH-8135 Langnau am Albis (CH)
(74) Representative: Williams, Julian David
(86) International application number: PCT/IB2001/001688
(87) International publication number: WO 2002/037488

(56) References cited:
- US-A- 4 747 698
- US-A- 5 929 438
- US-A- 6 101 164
- DESPONT M ET AL: "VLSI-NEMS CHIP FOR AFM DATA STORAGE" TECHNICAL DIGEST OF THE IEEE INTERNATIONAL MEMS '99 CONFERENCE. 12TH IEEE INTERNATIONAL CONFERENCE ON MICRO ELECTRO MECHANICAL SYSTEMS. ORLANDO, FL, JAN. 17 - 21, 1999, IEEE INTERNATIONAL MICRO ELECTRO MECHANICAL SYSTEMS CONFERENCE, NEW YORK, NY: IEE, 1999, pages 564-569, XP000830809 ISBN: 0-7803-5195-9
- BINNIG G ET AL: "ULTRAHIGH-DENSITY ATOMIC FORCE MICROSCOPY DATA STORAGE WITH ERASE CAPABILITY" APPLIED PHYSICS LETTERS, AMERICAN INSTITUTE OF PHYSICS. NEW YORK, US, vol. 74, no. 9, 1 March 1999 (1999-03-01), pages 1329-1331, XP000805900 ISSN: 0003-6951
- MAMIN H J: "THERMAL WRITING USING A HEATED ATOMIC FORCE MICROSCOPE TIP" APPLIED PHYSICS LETTERS, AMERICAN INSTITUTE OF PHYSICS. NEW YORK, US, vol. 69, no. 3, 15 July 1996 (1996-07-15), pages 433-435, XP000626028 ISSN: 0003-6951

## Description

This invention relates generally to AFM(Atomic Force Microscope)-based data storage and microscopy systems. Particular embodiments of the invention provide read/write apparatus for use in data storage devices and sensing apparatus for use in atomic force microscopes.

The atomic force microscope is a now well-known device in which the topography of a sample is sensed by a tip mounted on the end of a microfabricated cantilever. As the sample is scanned, the interaction of atomic forces between the nanometer-sharp tip and the sample surface causes pivotal deflection of the cantilever. The sample topography is determined by detecting this deflection. The AFM technology has also been applied to the field of data storage with a view to providing a new generation of high-density, high data-rate data storage devices for mass-memory applications. AFM-based data storage is described in detail in IBM Journal of Research & Development, Volume 44, No. 3, May 2000, pp323-340, "The 'Millipede'- More Than One Thousand Tips for Future AFM Data Storage", Vettiger et al., and the references cited therein. Here, the cantilever-mounted tip is used for reading and writing of data on the surface of a data storage medium. The basic principles of the cantilever design and the read and write operations are summarized briefly below.

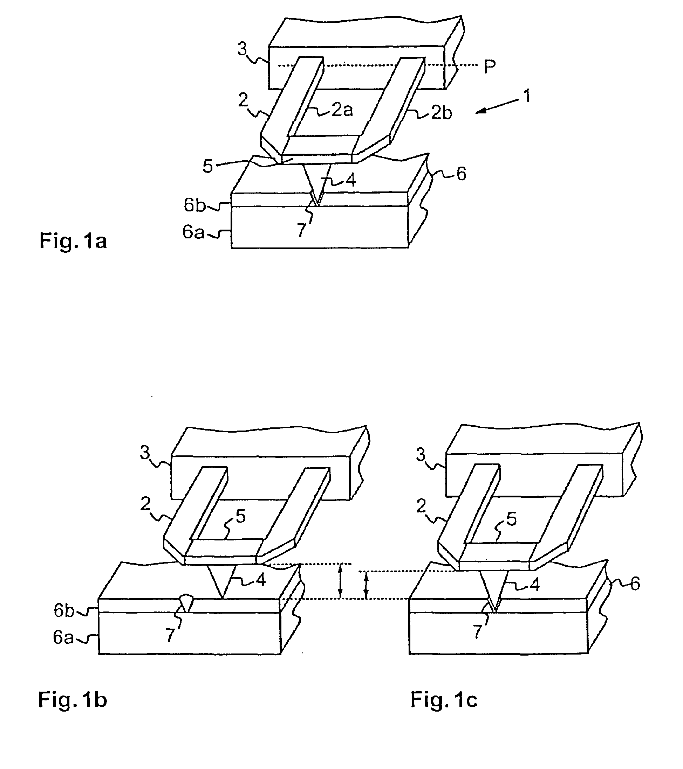

A read/write component 1 of the AFM-based data storage device is shown schematically in Figures 1a to 1c of the accompanying drawings. The component 1 comprises a generally U-shaped cantilever 2 which is connected to a support structure 3 (only partially shown in the figures). Flexing of the legs 2a, 2b of the cantilever 2 provides for substantially pivotal movement of the cantilever about a pivot axis P. The read/write tip 4 is provided on a heater 5 which forms a platform at the end of the cantilever 2. The highly-doped silicon cantilever legs 2a, 2b define a current path connecting the heater platform 5 between a pair of electrical supply lines (not shown) on the support structure 3. In operation, the read/write tip 4 is biased against the surface of a data storage medium indicated schematically at 6 and shown here in cross-section. Here, the storage medium comprises a silicon substrate 6a and a 40nm-thick polymer surface layer 6b.

In the write mode, the heater platform 5 can be heated to a writing temperature T_{W} by application of a write-mode potential across the supply lines. The consequent heating of the tip 4 results in heat transfer to the polymer surface layer 6a causing local melting of the polymer. This allows the tip 4 to penetrate the surface layer to form a pit, or bit indentation, 7 as shown in Figure 1a. Such a pit represents a bit of value "1", a bit of value "0" being represented by the absence of a pit. The storage medium 6 can be moved relative to read/write component 1 allowing the tip to write data over an area of the surface, or "storage field", corresponding to the field of movement.

In the read mode, the heater platform 5 is used as a thermal sensor by exploiting its temperature-dependent resistance. A read-mode potential is applied across the supply lines to heat the heater to a reading temperature T_{R} which is less than the writing temperature T_{W} and not high enough to cause melting of the polymer. As the storage field is scanned by the tip 4, the pivotal position of the cantilever 2 at each bit position differs according to the presence or absence of a pit 7. In the absence of a pit, as shown in Figure 1b, the distance between the heater platform 5 and storage medium 6 is greater than the corresponding distance when a pit is present, and the tip enters the pit, as shown in Figure 1c. Heat transport across the air gap between the heater 5 and storage medium 6 is thus more efficient when a pit is present at a bit position, and since more heat is then lost to the storage medium, the temperature of the heater 5, and hence its resistance, will be reduced. Thus, as the storage field is scanned, the data bits are detected by monitoring changes in the temperature of the heater 5, in practice by monitoring changes in the voltage across a series resistor in one of the supply lines.

While the operation of a single read/write component 1 has been explained above, in practice an array of such components is employed as described in the article referenced earlier. One of the two supply lines for each component is a row supply line which is common to all components in the same row of the array, and the other supply line is a column supply line which is common to all components in the same column of the array. In this way, the number of supply lines is minimized and a simple x-y (row-column) addressing scheme is used to supply power to the read/write components to drive the heaters 5.

Thus, with the above apparatus, only a single pair of supply lines is required to address each component in both the write mode and the read mode, allowing use of a simple x-y addressed array structure. However, in the individual components, the heater platform design is necessarily a tradeoff between the needs for writing and the needs for reading, and this limits operating efficiency in both the write mode and the read mode.

According to a first aspect of the present invention there is provided a read/write component for a data storage device, the read/write component comprising:
lever means and a support structure, the lever means being connected to the support structure for substantially pivotal movement and providing first and second current paths between a pair of electrical supply lines on the support structure via which the lever means is connectable, in use, to power supply means operable in a write mode and a read mode;
a write-mode heater provided on the lever means in the first current path;
a read/write tip provided on the write-mode heater;
a read-mode heater provided on the lever means in the second current path; and
decoupling means arranged to inhibit current flow to the write-mode heater via the first current path in use when the power supply means is operated in the read mode.

In embodiments of the present invention, therefore, separate write and read-mode heaters are provided on the lever means in respective current paths between the supply lines on the support structure, and decoupling means inhibits current flow via the current path to the write-mode heater when the component is operated in the read mode. The use of separate read and write heaters, together with the decoupling of the write heater in the read mode of operation, allows the design of the write and read heaters to be tailored more closely to the needs of the write and read-mode operations while still requiring only a single pair of supply lines to address the component in the two modes. For example, the write heater can be made small, with a low resistance, to provide a fast, low-voltage, low power writing element. In contrast, the read heater can be made large to increase the thermal sensitivity and signal-to-noise ratio in the read mode, while the decoupling means operates here to inhibit current flow to, and hence heating of, the write heater, thus preventing this heater from reaching a writing temperature. The efficiency of the component, for example in terms of writing speed, power consumption and reading sensitivity, can thus be significantly improved without requiring additional supply lines for the dual-mode operation, allowing convenient implementation of a simple x-y addressed array arrangement as discussed above.

In embodiments where the decoupling means serves only to inhibit current flow to the write heater in the read mode, then in the write mode some heating of the read heater will occur during heating of the write heater to T_{W}. While this energy loss may not be critical, in preferred embodiments the decoupling means is arranged additionally to inhibit current flow to the read-mode heater via the second current path in use when the power supply means is operated in the write mode. In such embodiments, the read and write heaters are effectively independently addressable, allowing the maximum performance benefits to be gained from read and write heater optimization.

Arrangements can be envisaged where the decoupling means comprises some form of supply-controlled switch for switching between the two current paths according to the operating mode. For simplicity however, in preferred embodiments the decoupling means comprises write decoupling means, which inhibits current flow to the write-mode heater when the power supply means is operated in the read mode, and read decoupling means which inhibits current flow to the read-mode heater when the power supply means is operated in the write mode. As discussed further below, the location of the decoupling means on the component depends on the particular design of the lever means.

The lever means may be configured as a cantilever, and while embodiments can be envisaged in which the current paths are provided as conductive tracks on the cantilever body, the cantilever is conveniently formed as a conductive structure which defines the current paths generally by virtue of its shape. In one example, the cantilever comprises two laterally disposed leg portions, connected at respective corresponding ends to the support structure, and first and second bridging portions each interconnecting the two leg portions. Here, the first bridging portion comprises the write-mode heater and the second bridging portion comprises the read-mode heater. In this example, the leg portions and the first bridging portion may themselves define the first current path, the second current path being similarly defined by the leg portions and the second bridging portion. Such an embodiment will be described in more detail below, and in this case the decoupling means is located on the cantilever. In another example, the cantilever comprises three laterally disposed leg portions, connected at respective corresponding ends to the support structure, a first bridging portion interconnecting the central leg portion to a first of the outer leg portions and a second bridging portion interconnecting the central leg portion to the second outer leg portion. Again, the first bridging portion comprises the write-mode heater and the second bridging portion comprises the read-mode heater. In this case, however, the first outer leg portion, the first bridging portion and the central leg portion define the first current path, and the second outer leg portion, the second bridging portion and the central leg portion define the second current path. With this construction, the decoupling means can be conveniently located on the support structure as will be demonstrated below.

In an alternative arrangement, rather than being configured as a cantilever as in the prior proposals, the lever means comprises an elongate lever body and two connection arms, extending outwardly from the lever body on either side thereof, connecting the lever body to the support structure and defining a pivot axis, offset from the ends of the lever body, about which the lever body pivots in use. In this "swing lever" arrangement, the write-mode heater and read-mode heater are disposed on opposite sides of the pivot axis at or near the ends of the lever body. Again, the lever body may be shaped to define the two current paths, and an example of such an embodiment will be described in detail below.

Whatever the particular construction of the lever means, in preferred embodiments the read-mode heater is offset further from the axis of pivotal movement of the lever means than the write-mode heater. This feature provides a mechanical amplification mechanism in that the pivotal movement described by the read-mode heater is amplified as compared with the movement described by the read/write tip, allowing still further improvements in read-back sensitivity as compared with prior arrangements.

The decoupling means itself may take various forms depending, inter alia, on how the power supply means is operated in the two different modes. In a particularly simple system, the power supply means may be arranged to impose a potential of one polarity between the supply lines in the write mode and a potential of the opposite polarity between the supply lines in the read mode. In a read/write component for use in such a system, the write decoupling means may simply inhibit current flow to the write-mode heater in the direction of current flow resulting from application of the read-mode potential, and the read decoupling means may simply inhibit current flow to the read-mode heater in the direction of current flow resulting from application of the write-mode potential.

Embodiments of the invention described above may additionally employ a novel read-sensing arrangement. In particular, the support structure may extend at least partially around the lever means in a plane substantially parallel to the axis of pivotal movement, and the read-mode heater may extend over a surface of the support structure around the lever means to provide a gap between the read-mode heater and said surface, such that the thickness of the gap varies with pivotal movement of the lever means. With this arrangement, rather than using the storage medium as a heat sink for the thermal read-sensing system as in prior devices, the support structure can be used as the heat sink. In embodiments employing this arrangement, the read-mode heater can be operated at a higher temperature without risk of melting the polymer and hence possibly erasing data. In fabricating the component, the gap between the read-mode heater and support structure can be made small and can be accurately controlled, for example using a sacrificial film process. This arrangement thus allows still further improvement of the read-mode sensitivity.

In embodiments of the first aspect of the invention as described above, decoupling means is provided to inhibit current flow and thus inhibit heating at least of the write mode heater in the read mode of operation. A second aspect of the present invention provides a read/write component for a data storage device, the read/write component comprising:
lever means and a support structure, the lever means being connected to the support structure for substantially pivotal movement and providing at least one current path between a pair of electrical supply lines on the support structure;
a write-mode heater provided on the lever means in the or a said current path;
a read/write tip provided on the write-mode heater; and
a read-mode sensor provided on the lever means in the or a said current path;
wherein the thermal properties of the write-mode heater and adjacent regions of the lever means, and of the read-mode sensor and adjacent regions of the lever means, are such that, by application of a first signal pulse via the supply lines in use, the write-mode heater is heatable to a writing temperature T_{W} while the read-mode sensor remains at a temperature less than T_{W}, and by application of a second signal pulse, which is of smaller amplitude and longer duration than the first signal pulse, via the supply lines in use, the read-mode sensor is heatable to a reading temperature T_{R} < T_{W} while the write-mode heater remains at a temperature less than T_{W}.

In embodiments of the second aspect of the invention, therefore, a read mode sensor is provided separately of the write mode heater as before, but here the decoupling mechanism is thermal rather than electrical. Specifically, in these embodiments the arrangement is such that the thermal properties of the write-mode heater, the read-mode sensor, and the adjacent regions of the lever means, enable: (a) the write-mode heater to be heated to T_{W} by a first signal pulse while the read-mode sensor temperature stays below T_{W}; and (b) the read-mode sensor to be heated to T_{R} by a second, lower but longer, signal pulse while the write-mode heater temperature stays below T_{W}. Thus, the write-mode heater is effectively thermally decoupled in the read mode to the extent that it does not heat to T_{W} in response to the comparatively long, low-amplitude read-mode pulse. Similarly, the read-mode sensor is effectively thermally decoupled in the write mode to the extent that it does not heat to T_{W} in response to the comparatively short, high-amplitude write-mode pulse. As with the electrically-decoupled embodiments described above, therefore, a read mode sensor is provided separately of the write mode heater but the component can still be addressed in both the write and read modes using only a single pair of supply lines. Corresponding advantages are therefore provided by embodiments employing this thermal decoupling mechanism.

It will be appreciated by those skilled in the art that various aspects of the design, such as the construction, arrangement, shape, size and material, of elements of the lever means can be selected appropriately to provide the required thermal properties. For example, the thermal capacitance of a given element is indicative of the amount of energy required to heat the element to a given temperature and depends on the material and volume of the element. Similarly, the thermal time constant of an element is dependent on the rate of heat loss from surfaces of the element, and the efficiency of adjacent elements in transporting heat, and is thus dependent on factors such as the size, dimensions, cross-section and material. By appropriate choice of various features, therefore, different thermal coupling strengths between the write-mode heater and surroundings, and between the read-mode heater and surroundings, can be achieved.

In preferred embodiments, the write-mode heater is smaller than the read-mode sensor, and the regions of the lever means adjacent the write-mode heater provide for a relatively high rate of heat loss from the write-mode heater in use, while the regions of the lever means adjacent the read-mode sensor provide for a relatively low rate of heat loss from the read-mode sensor in use. For example, in the particularly preferred case where the lever means is formed substantially of conductive material shaped to define said at least one current path, the regions of the lever means adjacent the read-mode sensor preferably comprise constrictions to inhibit heat loss from the read-mode sensor in use.

The lever means may have various configurations, cantilever or otherwise, as in the electrically decoupled embodiments, though a particularly convenient cantilever configuration will be described further below. Moreover, embodiments of this aspect of the invention may employ the novel read-sensing arrangement discussed above which uses the support structure as a heat sink, and may take advantage of the mechanical amplification available by locating the read-mode sensor further from the pivot axis than the write heater. In some embodiments, the read-mode sensor itself may comprise a heater as before. In other embodiments, however, the read-mode sensor may simply comprise a thermal-resistive sensor which is sufficiently close to the write-mode heater that heat loss from the write-mode heater during application of the read-mode signal pulse in use causes heating of the read-mode sensor to the reading temperature T_{R}.

By exploiting the basic principle of the novel read-sensing arrangement described above, the efficient implementation of read/write components which use various read-sensing mechanisms becomes practicable. Thus, according to a third aspect of the present invention there is provided a read/write component for a data storage device, the read/write component comprising:
lever means and a support structure, the lever means being connected to the support structure for substantially pivotal movement and providing a first current path between a pair of electrical supply lines on the support structure, wherein the support structure extends at least partially around the lever means in a plane substantially parallel to the axis of said pivotal movement;
a write-mode heater provided on the lever means in the first current path;
a read/write tip provided on the write-mode heater;
a first proximity sensor element provided on a portion of the support structure around the lever means; and
a second proximity sensor element provided on the lever means and disposed over the first proximity sensor element such that the distance between the first and second proximity sensor elements varies with pivotal movement of the lever means;
wherein at least one of the lever means and support structure provides a second current path for coupling of the supply lines via the first and second proximity sensor elements.

Examples of read/write components embodying this aspect of the invention will be described further below. It will be appreciated that embodiments of this aspect of the invention may employ decoupling means as described above, in particular to inhibit current flow at least to the write-mode heater in the read mode of operation, and preferably also to inhibit current flow to the read-sensing arrangement in the write mode where required. Moreover, various configurations of the lever means can be envisaged as before, though a particularly preferred arrangement will be described in detail below.

While the above focuses specifically on data storage applications, various features of the components described above, and most particularly the novel read sensing arrangement, can also provide significant advantages in atomic force microscopy applications AFM technology is well known in the art and need not be described in detail here, but it is useful to consider the following basic description of the operating principles.

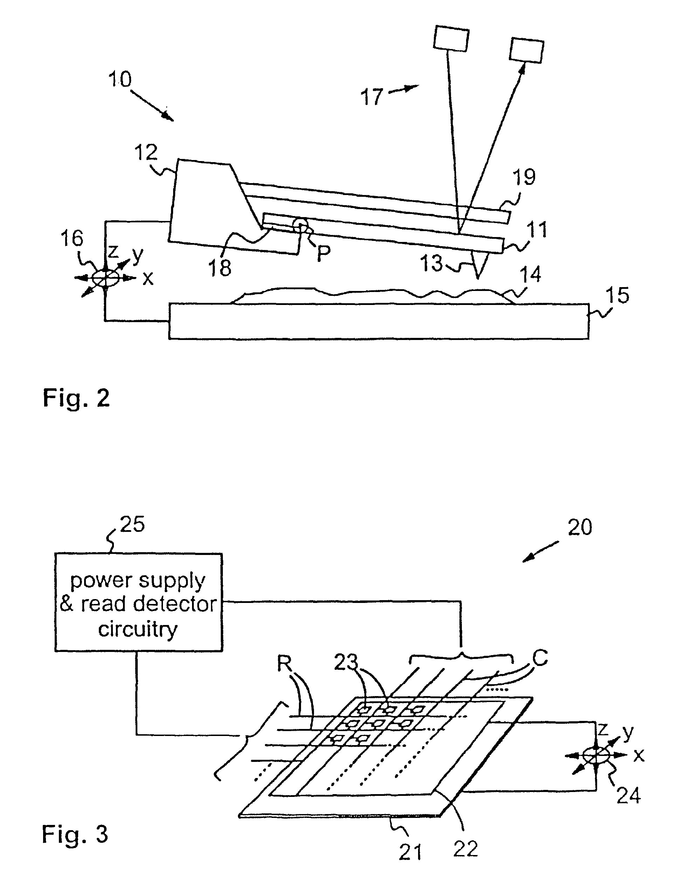

Figure 2 of the accompanying drawings is a schematic representation of an AFM, illustrating in the same diagram the three basic detection mechanisms employed in the art. The sensing apparatus 10 of the AFM comprises a microfabricated cantilever 11 connected to a support structure 12 for substantially pivotal movement about a pivot axis P, this movement being provided as before by flexing of the cantilever body. The sensing tip 13 is disposed at the end of the cantilever remote from the support structure 12. In operation, a sample 14 to be analyzed is placed on a sample support 15. A drive mechanism, indicated schematically at 16, effects relative movement of the sample support 15 and sensing apparatus 10 such that the sample is scanned by the tip 13. During scanning, interaction of atomic forces between the tip and sample surface effects pivotal movement of the cantilever 11, and the topography of the sample is revealed by detecting this movement. The three basic detection systems are indicated generally at 17, 18 and 19. (In practice, of course, only one of these detection systems is employed). The first system employs an optical mechanism to detect deflection of the cantilever as indicated schematically at 17 in the figure. The second system utilizes a piezoelectric element 18 which senses the stress caused by the pivotal deflection of the cantilever. The third system employs an in-line electrode 19, mounted above the cantilever 11. This serves as a proximity sensor for the cantilever 13, the distance between the cantilever and in-line electrode 19 varying with deflection of the cantilever.

Various problems are associated with the AFM systems described above. The in-line electrode arrangement 19 is difficult to fabricate, whereas provision of the optical sensing mechanism 17 results in a relatively complex arrangement. Where the piezoelectric mechanism 18 is employed, sensitivity is dependent on the stress induced by flexing of the cantilever and this stress increases with rigidity of the cantilever. A more rigid cantilever gives a higher sensitivity but higher tip-sample contact pressure is then required for the same deflection, resulting in increased wear on the tip and potential damage to the sample.

According to a fourth aspect of the present invention there is provided sensing apparatus for an atomic force microscope, the apparatus comprising:
lever means and a support structure, the lever means being connected to the support structure for substantially pivotal movement and the support structure extending at least partially around the lever means in a plane substantially parallel to the axis of said pivotal movement; and
a sensing tip provided on the lever means such that interaction of atomic forces between the tip and a sample scanned thereby in use causes said pivotal movement of the lever means;
wherein part of the lever means extends over part of the support structure around the lever means such that the distance between said parts varies with said pivotal movement, whereby the topography of a sample scanned by the tip in use is indicated by variations in said distance.

In embodiments of this aspect of the invention, therefore, tip movement can be monitored simply by detecting the relative proximity of the particular parts of the lever means and support structure defined above. This provides for a simple yet highly efficient proximity sensing mechanism, obviating the drawbacks of the existing systems discussed above.

Clearly, the variations in proximity of the aforementioned parts of the apparatus can be detected in various ways, and particular examples will be described below. Preferably, however, at least one of said parts provides a proximity sensor element for sensing such variations. Particularly preferred embodiments employ thermal proximity sensing similar to the data storage components described earlier. Here, said part of the lever means may comprise a heater, the lever means providing a current path for connecting the heater to a power supply via the support structure in use, whereby said part of the support structure serves as a heat sink such that the temperature of the heater varies with variations in said distance. With the support structure serving as a heat sink, the heater can be operated at a relatively high temperature without risk of damaging the sample which may be a biological sample for example. Whatever proximity sensing system is employed, to enhance sensitivity the aforementioned part of the lever means is preferably located at or near an end of the lever means remote from the axis of pivotal movement. As with the read/write components described earlier, the lever means may have various configurations, though the swing lever configuration with mechanical amplification is particularly advantageous here. As described further below, various other features discussed above in relation to read/write components can be employed to advantage in embodiments of the sensing apparatus.

Another aspect of the invention provides an atomic force microscope incorporating sensing apparatus as described above. Respective further aspects of the invention provide apparatus comprising an array of read/write components according to the first, second and third aspects of the invention, and data storage devices incorporating such arrays.

Preferred embodiments of the invention will now be described, by way of example, with reference to the accompanying drawings in which:
Figures 1a to 1c illustrate the construction and operation of a prior read/write component for a data storage device;
Figure 2 is a schematic representation of an atomic force microscope illustrating the basic detection mechanisms used in prior systems;
Figure 3 is a schematic representation of a data storage device in which read/write components embodying the invention can be employed;
Figure 4a is a schematic illustration of a first read/write component embodying the invention;
Figure 4b shows the equivalent electrical circuit for the read/write component of Figure 4a;
Figure 5 is a schematic illustration of a second embodiment of a read/write component;
Figure 6a is a schematic illustration of a third embodiment of a read/write component;
Figure 6b shows the equivalent electrical circuit for the read/write component of Figure 6a;
Figure 7a is a schematic illustration of a fourth embodiment of a read/write component;
Figure 7b shows the equivalent electrical circuit for the read/write component of Figure 7a;
Figure 8 is a schematic illustration of a fifth embodiment of a read/write component;
Figures 9a to 9e illustrate various proximity sensor arrangements for use in embodiments of the invention;
Figure 10a is a schematic illustration of a sixth embodiment of a read/write component;
Figure 10b shows the equivalent electrical circuit for the read/write component of Figure 10b;
Figure 10c illustrates read and write-mode signal pulses for driving the component of Figure 10a; and
Figure 11 is a schematic representation of AFM sensing apparatus embodying the invention.

Referring first to Figure 3, the data storage device 20 includes a data storage medium 21 and read/write apparatus in the form of an array 22 of read/write components 23. (Various embodiments for use as read/write components 23 will be described in detail below. It is to be appreciated, however, that these components may include additional circuitry, such as amplifiers etc., where required, though such additional circuitry is not central to embodiments of the invention and is therefore omitted from the descriptions hereinafter). Each read/write component 23 is connected to two supply lines, a row supply line R and a column supply line C, as indicated schematically in the figure. All components 23 in the same row of the array share the same row supply line R. Similarly, all components in the same column of the array share the same column supply line C. Drive means, indicated schematically at 24, enables the relative movement of the array and storage medium, whereby the array can be accurately located in its operating position against the storage medium and, during operation, each component 23 can scan its individual storage field as described earlier.

The row and column lines R, C of array 22 are connected to power supply and read detection circuitry indicated generally at 25. Circuitry 25 operates to supply power to the components of the array 22, the individual components 23 being addressed by their row and column lines in known manner via row and column multiplexers (not shown separately) of circuitry 25. Each component 23 can be addressed in both a write mode and a read mode, the power supply circuitry supplying a write mode signal via the supply lines in the write mode, and a read mode signal via the supply lines in the read mode. The read detector circuitry of block 25 operates in the read mode to detect the bit values indicated by the read-sensing mechanisms of components 23. In general, this read detection can be performed in various ways as will be apparent to those skilled in the art. In the particular embodiments described hereinafter, however, the read detection is conveniently performed as in prior systems by measuring the voltage across series resistors connected in the column lines C of array 22.

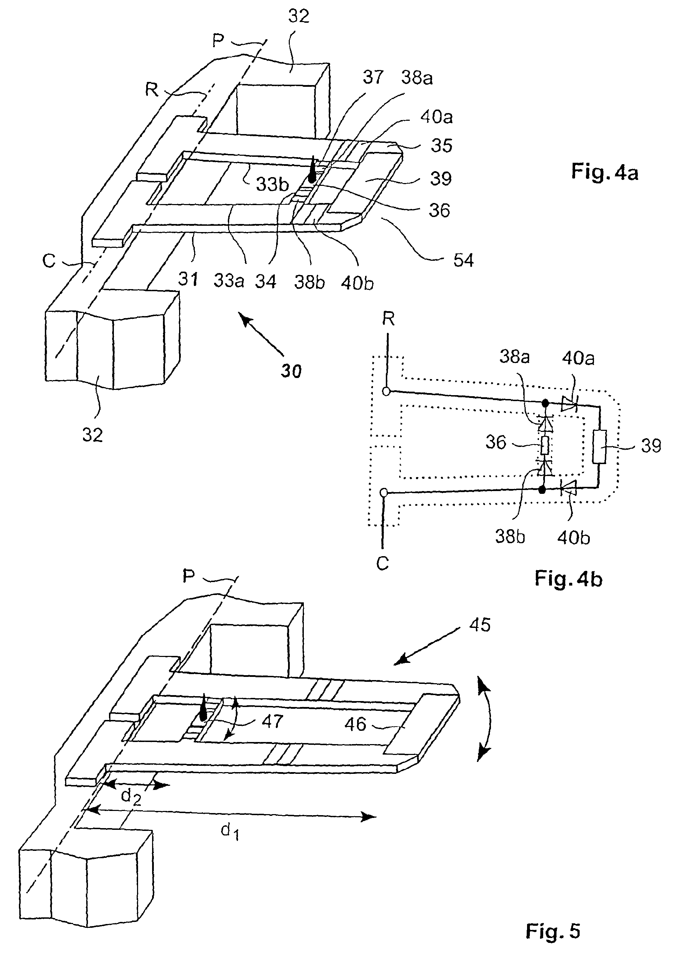

Figure 4a illustrates a first embodiment of a read/write component 30 which may be employed in an array of similar components as the array 22 in the data storage device of Figure 3. The component 30 comprises lever means, in the form of a cantilever 31, connected to a support structure 32 only part of which is shown in the figure. (An integral support structure is in fact provided for all components in the array, the entire array being fabricated as an integrated circuit using semiconductor processing techniques of generally known type, so that the main body of the chip provides the support structure 32 for all cantilevers 31 in the array). The cantilever 31 is formed by two laterally disposed cantilever legs 33a, 33b interconnected by first and second bridging portions 34 and 35 respectively. A write-mode heater 36 is centrally disposed on the first, relatively small-section bridging portion 34 and forms a platform for the read/write tip 37. A pair of diodes 38a and 38b are integrated in bridging portion 34, one on either side of the heater 36. These diodes 38a, 38b constitute write decoupling means as explained below. The second bridging portion 35 is formed by a read-mode heater 39 which is considerably larger than the write-mode heater 36 and connects the ends of the cantilever legs 33a, 33b remote from the connection to the support structure. A further pair of diodes 40a and 40b are integrated in the sections of the cantilever legs between the first and second bridging portions, one on either side of the read-mode heater 39. These diodes 40a, 40b constitute read decoupling means as explained below.

By virtue of flexibility of the legs 33a, 33b of the cantilever, the cantilever can describe substantially pivotal movement about a pivot axis P at the connection to the support structure. (It will of course be appreciated that, since this movement is provided by flexing of the cantilever legs, the motion is not strictly pivotal movement about a pivot axis as with a rigid body mounted on a pivot. The effect is substantially the same, however, and the terms "pivotal movement" and "pivot axis" as used herein should be construed accordingly).

During fabrication of the array, the various elements of the cantilever structure are formed by known semiconductor processing techniques. The cantilever legs 33a, 33b here are formed of highly-doped silicon to provide conductive connections between the write and read heaters 36, 39 and the row and column supply lines R and C on the support structure 32. It can be seen that, by virtue of its shape, the cantilever 31 defines two current paths between the supply lines R, C. The cantilever legs 33a, 33b and the first bridging portion 34 provide the first current path, containing the diodes 38a, 38b and the write heater 36. The legs 33a, 33b and the second bridging portion 35 provide the second current path, containing the diodes 40a, 40b and the read heater 39. Figure 4b shows the equivalent electrical circuit for the component 30. It can be seen from this figure that the diode pair 38a, 38b are connected so as to inhibit current flow in one direction between the supply lines, whereas the diode pair 40a, 40b are connected so as to inhibit current flow in the opposite direction.

In operation of the component 30 in an array 22 of the storage device of Figure 3, the power supply circuit 25 operates to apply a potential of one polarity between the supply lines R, C in the write mode, and a potential of the other polarity between the supply lines in the read mode. Thus, in the write mode, current flows in the first current path to write heater 36 via diodes 38a and 38b, but flow of current to the read heater 39 in the second current path is inhibited by diodes 40a and 40b. Similarly, in the read mode, current flows in the second current path to read heater 39 via diodes 40a and 40b, but flow of current to the write heater 36 in the first current path is inhibited by diodes 38a and 38b. In the write mode therefore, the small, low resistance write heater 36 in the narrow bridging portion 34 can be heated very quickly to the writing temperature T_{W}, without unnecessary expenditure of energy on the read heater 39. In the read mode, the relatively large read heater 36 provides high sensitivity for the thermal sensing operation and, during heating to the reading temperature T_{R}, the write heater 36 is protected from heating by the decoupling action of the diodes 38a, 38b. The tip 37 and polymer surface layer of the storage medium are therefore kept cool during reading reducing wear on the polymer. Overall, therefore, component 30 provides a highly efficient read/write component, with a high write-speed, low power consumption and high read-sensitivity, which can be addressed in both modes via the single pair of row and column supply lines.

Clearly, only one diode of each pair 38a, 38b and 40a, 40b need be provided in this embodiment to achieve the electrical decoupling effect. However, in this preferred arrangement, the two diodes of each pair are provided to balance the cantilever about its longitudinal axis perpendicular to the pivot axis P. Note also that, of the two heaters 36 and 39, the read heater 39 is provided on the bridging portion of cantilever 31 which is furthest from the pivot axis P. While the opposite arrangement is possible, this arrangement ensures that the pivotal movement of the write platform due to read-mode scanning by the tip 37 is enhanced in the movement of the read platform. Figure 5 illustrates an example of an embodiment in which this effect is exploited further. In the component 45 of this embodiment, the various elements of the cantilever correspond to those of Figure 4a, but the ratio of distance d₁ between the read heater 46 and pivot axis to the distance d₂ between the write heater 47 and pivot axis has been increased, thereby increasing the amplification of the pivotal motion of the tip as indicated by the arrows in the figure. This mechanical amplification mechanism provides still further improvement in read-sensitivity of the component. Clearly, the amplification factor (d₁/d₂) achievable for a practical tip-to-pivot axis distance will depend on various aspects of the component design such as the operating speed, flexibility and resonant frequency of the cantilever. However, an amplification factor of at least 2 can be readily achieved, and in preferred embodiments the amplification factor can be from about 5 up to about 10 depending on design constraints.

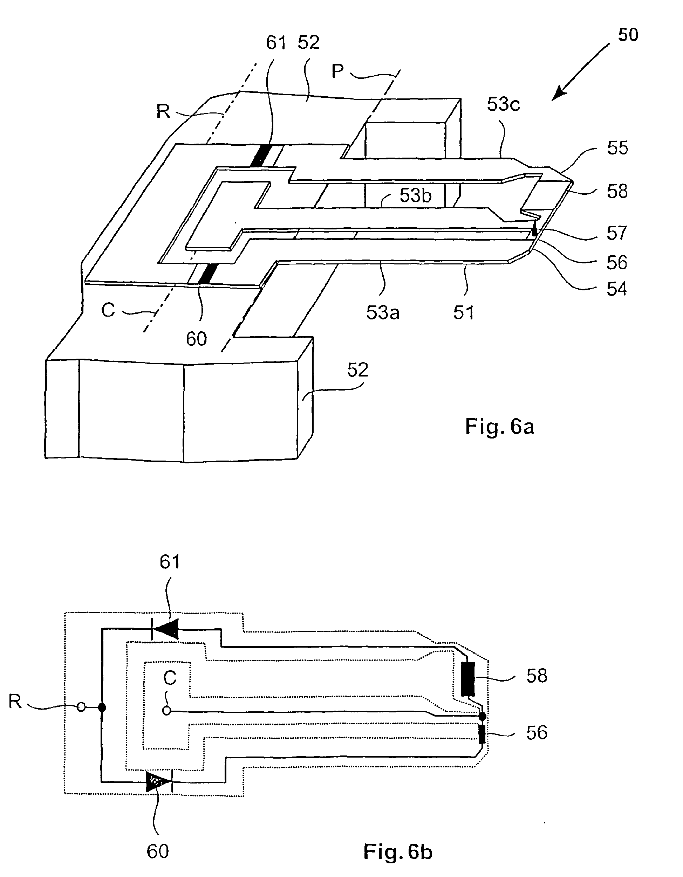

Figure 6a illustrates a third embodiment of a read/write component for use in the data storage device of Figure 3. The component 50 of this embodiment again comprises a cantilever 51 connected to a support structure 52 for substantially pivotal movement about a pivot axis P. Here, however, the cantilever has three laterally disposed legs 53a, 53b and 53c. A first bridging portion 54 interconnects the outer leg 53a and the central leg 53b. A second bridging portion 55 interconnects the outer leg 53c and the central leg 53b. The first bridging portion is formed by a write-mode heater 56 which forms a platform for read/write tip 57. A read-mode heater 58 is provided in the second bridging portion 55. As before, the conductive cantilever legs 53a, 53b, 53c provide connections to row and column supply lines R and C on the support structure 52 as indicated in the figure. It can be seen that the cantilever again defines two current paths between the supply lines R, C. The first current path is defined by the outer leg 53a, the first bridging portion 54, containing write heater 56, and the central leg 53b. The second current path is defined by the outer leg 53c, the second bridging portion 55, containing read heater 58, and the central leg 53b. Decoupling means are again provided, but here the decoupling means is located on the support structure. Specifically, as shown in the figure, a write-decoupling diode 60 is connected between the row supply line R and the outer leg 53a, and a read decoupling diode 61 is connected between the row supply line R and the outer leg 53c. The equivalent electrical circuit for this embodiment is illustrated in Figure 6b, from which it can be seen that the diodes 60 and 61 are connected to inhibit current flow in opposite directions between the supply lines R, C. Thus, in operation of this embodiment in the data storage device of Figure 3, the power supply circuit again applies potentials of opposite polarities between the supply lines in the write and read modes. In the write mode, current flows in the first current path to write heater 56 via diode 60, but flow of current to the read heater 58 in the second current path is inhibited by diode 61. In the read mode, current flows in the second current path to read heater 58 via diode 61, but flow of current to the write heater 56 in the first current path is inhibited by diode 60. Corresponding operational advantages therefore apply to this embodiment as to the component 30 of Figure 4a. Here, however, only a single diode is provided in each current path. Moreover, with this cantilever design the decoupling means can be conveniently located on the support structure rather than the cantilever itself.

While diodes are employed as the electrical decoupling mechanism in the particular embodiments illustrated in the drawings, it will be appreciated by those skilled in the art that the electrical decoupling system can be implemented in various other ways, for example using transistors or other elements arranged to provide the desired decoupling effect. Moreover, while opposite-polarity voltages are employed in the examples here for the write and read modes of operation, clearly other systems can be envisaged, for example using voltages of different levels and circuit elements arranged to inhibit current flow above, below, between or outside certain threshold levels. Where the decoupling mechanism is more complex than the simple diode arrangements illustrated herein, the ability to locate the decoupling means on the support structure can be especially advantageous. The cantilever design of Figure 6a therefore provides particular flexibility in implementation of the decoupling system.

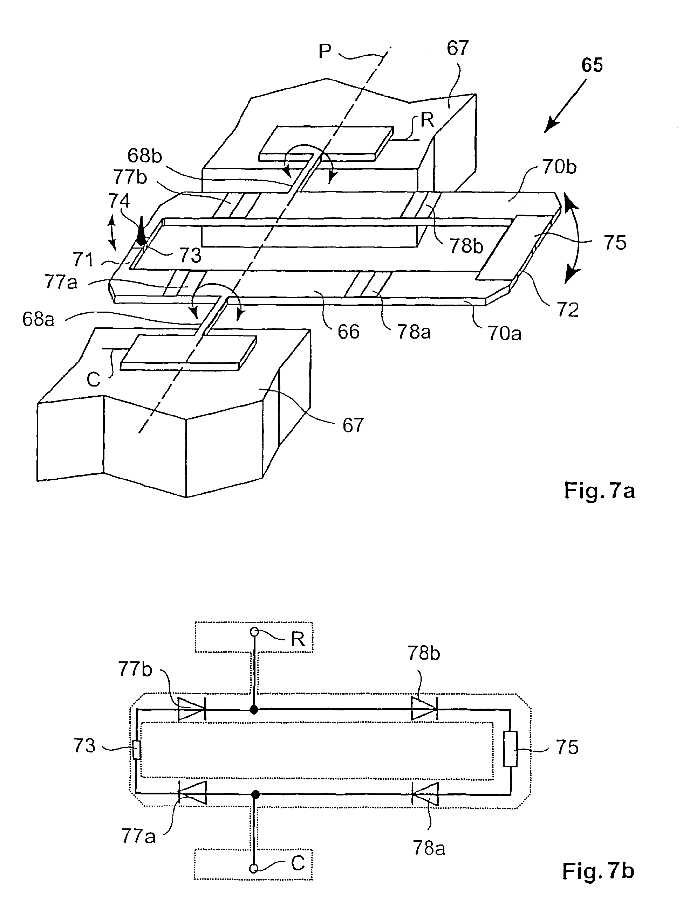

Figure 7a illustrates a fourth embodiment of a read/write component where the lever means has a "swing lever" configuration. Specifically, in the component 65 of this embodiment, the lever means has an elongate lever body 66 which is connected to the support structure 67 (again only partially shown in the figure) by two connection arms 68a and 68b. Torsion in these connection arms provides for substantially pivotal movement of the lever body 66 about a pivot axis P as indicated by the arrows in the figure. The lever body 66 comprises two laterally disposed leg portions 70a and 70b interconnected at one end by a first bridging portion 71 and at the other end by a second bridging portion 72. A small write-mode heater 73 is located in the first, relatively narrow, bridging portion 71, and provides a platform for the read/write tip 74. The second bridging portion 72 is formed by a relatively large read-mode heater 75. The conductive lever body and connection arms define two current paths between the row and column lines R and C on the support structure 67. The first current path is provided by the connection arms 68a, 68b, the sections of the legs 70a, 70b between the connection arms and first bridging portion 71, and the first bridging portion containing the write heater 73. The second current path is provided by the connection arms 68a, 68b, the sections of the legs 70a, 70b between the connection arms and second bridging portion 72, and the second bridging portion containing the read heater 75. Decoupling means in the form of write decoupling diodes 77a, 77b and read decoupling diodes 78a, 78b are provided on the lever body 66. The write decoupling diodes 77a, 77b are disposed, symmetrically about the longitudinal axis of the lever body, between the connection arms and write heater 73, and the read decoupling diodes 78a, 78b are similarly disposed between the connection arms and read heater 75.

Figure 7b shows the equivalent electrical circuit for the component 65 of this embodiment. It can seen that here, as before, the write decoupling diodes 77a, 77b are connected to inhibit current flow between the supply lines R, C in the opposite direction to the read decoupling diodes 78a, 78b. Thus, in operation in the data storage device of Figure 3, the read decoupling diodes 78a, 78b inhibit current flow to read heater 75 when a write-mode potential is applied between the supply lines to drive the write heater via the first current path. Similarly, write decoupling diodes 77a, 77b inhibit current flow to write heater 73 when an opposite-polarity, read mode potential is applied to drive the read heater 75 via the second current path. Corresponding operational advantages therefore apply to this embodiment as to the cantilever arrangements described above. In addition, torsion of the small-section connection arms 68a, 68b is highly effective for providing pivotal movement of the lever body without significant flexing of the cantilever legs 70a, 70b. Note also that the mechanical amplification mechanism discussed above is easily employed in this swing lever configuration, the read heater 75 being offset further from the pivot axis P than the write mode heater with tip 74.

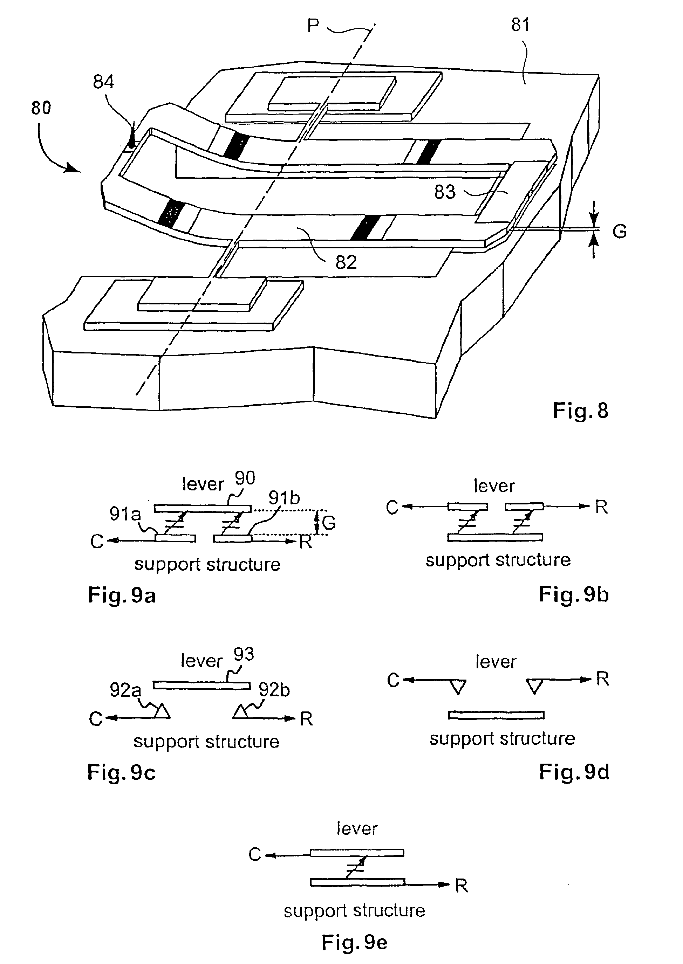

In the embodiments described above, read-sensing can be performed as in prior systems by using the storage medium 21 as the heat sink for the read heater. However, Figure 8 illustrates an example of a read/write component in which the lever means and support structure are arranged for thermal read-sensing to be performed using the support structure as the heat sink. The component 80 of this embodiment is generally similar to the swing-lever embodiment of Figure 7a and only the key differences will be described here. Firstly, as illustrated in the figure, the support structure 81 in this embodiment extends around the lever body 82 in a plane substantially parallel to the pivot axis P and the general extent of the lever body. (Of course, the surface of the support structure need not itself be planar, the plane referred to here simply indicating the general orientation in which the support structure extends around the lever body). Secondly, part of the lever body 82, specifically the read-mode heater 83, extends over part of the support structure 81 to provide a gap G between the heater and the facing surface of the support structure. It can be seen from the figure that the thickness of the gap G will vary with pivotal movement of the lever body. In this embodiment, therefore, the support structure provided by the body of the array chip can be used as the heat sink for the thermal read-sensing system. This allows still further improvement in read-sensitivity since the gap G can be made very small and can be accurately controlled during component fabrication, for example by a sacrificial film process, and the read-mode heater can be operated at a higher temperature without risk of erasing data A further notable difference here is that the lever body 82 is shaped so that, relative to the surface of the support structure facing the read heater 83, the write heater is offset further in the direction of the tip 84 than the read heater. In this particular embodiment, this is achieved as shown in the figure by the upwardly-bent section of the lever body on the tip side of the connection arms. This feature serves to increase the read heater-to-storage medium spacing in use, so reducing the effect of variations in this spacing on the results of the read-sensing operation, and further enhancing read-sensitivity. (A similar effect could be achieved in other ways in different arrangements. For example, in a one-dimensional array, or a single-tip system such as the AFM sensing apparatus described below, the read heater-to-storage medium spacing (or AFM equivalent) could be increased simply by tilting the apparatus relative to the medium so that the read heater is further from the medium than the tip).

While use of the read-sensing arrangement of Figure 8 is particularly convenient in components with the swing lever configuration, it will be appreciated that similar arrangements could be employed in cantilever embodiments such as those discussed above by appropriate configuration of the support structure. In such cases, the write-heater platform could be raised relative to the read heater if desired to increase the read heater-to-storage medium spacing as described above. Also, for example, in the embodiment of Figure 6a the read heater could be offset further from the pivot axis than the tip platform to facilitate use of the support structure as the heat sink and exploit the mechanical amplification mechanism discussed earlier. In any case, where such a read-sensing arrangement is employed, it will be apparent that the support structure need not extend entirely around the lever means, but just sufficiently to enable the structure to serve as the heat sink for the read heater.

With the read-sensing arrangement just described, proximity sensing is performed between the read heater and support structure using the read heater as a thermal proximity sensor. However, with the same basic arrangement, read-sensing systems using other proximity sensing mechanisms become practicable. In general, a first proximity sensor element can be disposed on the support structure, and a second proximity sensor element can be provided on the lever means, this second element being disposed over the element on the support structure such that the distance between the two varies with the pivotal movement. Figures 9a to 9d illustrate examples of alternative proximity sensing mechanisms where electrodes are employed as the proximity sensor elements. In Figure 9a, an electrode 90 is provided in place of the read heater on the lever means, and a pair of electrodes 91a and 91b are provided on the support structure. Each of the electrodes 91a, 91b is connected to one of the supply lines R, C on the support structure. Air in the gap G thus serves as a dielectric between the lever and support structure electrodes to provide a variable capacitance as the thickness of the gap G varies with pivotal movement of the lever. Variations in this capacitance can thus be detected to provide the read-mode output. Note that a current path to the electrode 90 via the lever body is not required here, the current path being provided on the support structure for coupling the row and column lines, via the capacitor electrodes, in the read mode. The opposite arrangement is illustrated in Figure 9b. Here, the pair of electrodes, and connections to the row and column lines, are provided on the lever and the single electrode is located on the support structure. Figure 9c shows another arrangement in which a pair of contact electrodes 92a, 92b are provided on the support structure, and a bridging contact 93 is provide on the lever. This arrangement effectively serves as a switch to provide a digital read-out: when the electrodes are in contact, the switch is ON and current flows between the supply lines; when the electrodes are not in contact, the switch is OFF and no current flows between the supply lines. Here, again, the current path between the supply lines is provided on the support structure for the read-mode operation. Figure 9d shows the equivalent arrangement where the two contact electrodes, and hence the current path between the supply lines, are provided on the lever. Clearly, however, an arrangement such as that shown in Figure 9e can be envisaged, where an electrode on the lever is connected to one of 5 the supply lines via the lever body, and an electrode on the support structure is connected to the other supply line via the support structure. In this case therefore, the current path for read mode operation is provided in part on the lever and in part on the support structure. Of course, the electrodes in Figure 9e could also be contact electrodes for operation as a switch.

Depending on the particular read-sensing mechanism employed, electrical decoupling may or may not be necessary. In preferred embodiments, however, at least write decoupling means is provided to inhibit current flow to the write-mode heater in the read mode of operation as described earlier. Provision of read decoupling means may be less important, for example in the switch arrangement. Usually, however, it will be preferable also to provide read decoupling means to inhibit current flow via the current path to the proximity sensor elements in the write mode of operation. Such read decoupling means may be located on the lever or support structure as appropriate, depending on the location of the current path for the read mode of operation as described above. In general, even in the thermal read-sensing embodiments described earlier, only write decoupling means may be provided in some cases, though preferred embodiments will provide both write and read mode decoupling.

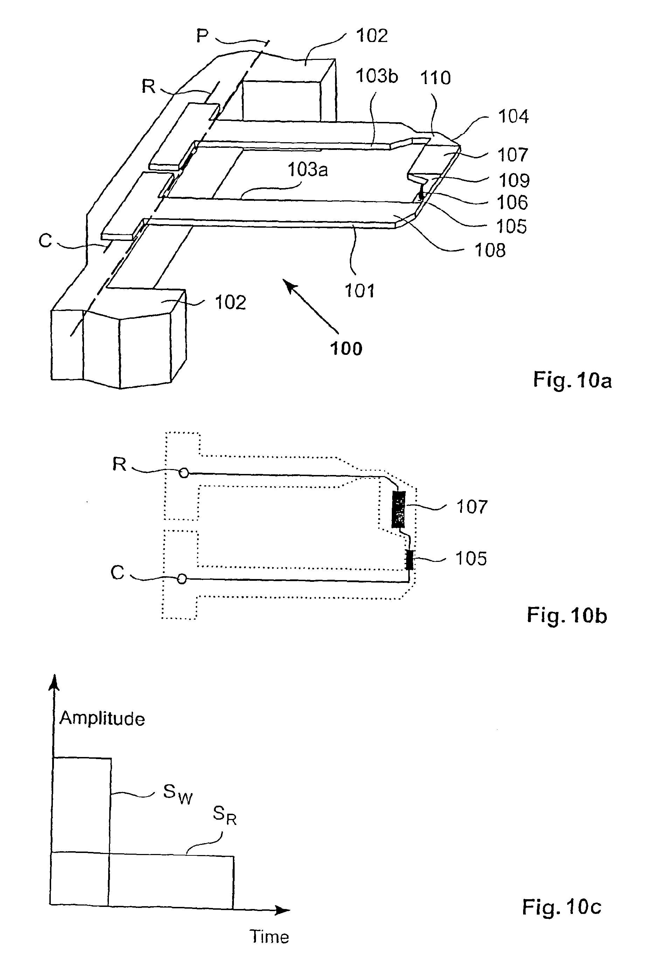

The embodiments illustrated thus far employ an electrical decoupling mechanism. An example of an embodiment which uses a thermal decoupling mechanism will now be described with reference to Figures 10a to 10c. The component 100 of this embodiment again comprises a cantilever 101 connected to a support structure 102 (only partially shown) for substantially pivotal movement about a pivot axis P. The cantilever has two laterally disposed leg portions 103a, 103b interconnected at the ends remote from the pivot axis by a bridging portion 104. In this example, therefore, the conductive cantilever 101 defines a single current path between the supply lines R, C on the support structure, this current path being provided by the cantilever legs 103a, 103b and the bridging portion 104. Here, both the write-mode heater 105, with tip 106, and the read-mode heater 107 are located on bridging portion 104. Thus, both the write-mode heater and the read-mode heater lie in the same current path as indicated in the equivalent electrical circuit of Figure 10b.

When the component 100 is employed in the data storage device of Figure 3, the power supply circuit 25 is operated to apply different signal pulses via the supply lines R, C in the write and read modes of operation as shown in Figure 10c In the write mode, a relatively short, high amplitude pulse S_{W} is applied. In contrast, in the read mode a relatively long, low amplitude pulse S_{R} is applied. Although the read and write-mode heaters lie in the same current path, the cantilever configuration is such that the thermal properties of the heaters and adjacent regions of the cantilever provide a dual-mode thermal decoupling effect. Specifically, application of the short, high-amplitude write mode pulse S_{W} results in heating of the write heater 105 to the writing temperature T_{W}, but the read heater 107 heats to a lesser extent during this process and thus remains at a temperature less than T_{W}. Similarly, application of the long, low-amplitude read mode pulse S_{R} results in heating of the read heater 107 to its reading temperature T_{R}, but heating of the write heater is less efficient in this mode, so that the write heater remains at a temperature less than T_{W}. The features of the cantilever design giving the thermal properties which provide this decoupling effect can be seen in Figure 10a. The write heater 105 is very small by comparison with the read heater 107, but there is good thermal contact between the write heater and the adjacent regions 108, 109 of the cantilever. In contrast, there is relatively poor thermal contact between the large read heater 107 and the adjacent regions 109, 110 of the cantilever, these regions 109, 110 constituting constrictions as compared with the adjoining sides of the read heater. In operation, therefore, regions 109, 110 provide a comparatively low rate of heat loss from the read heater, whereas regions 108, 109 provide a comparatively high rate of heat loss from the write heater. Thus, write heater 105 heats quickly but loses heat at a relatively high rate to the cantilever, whereas read heater 107 heats slowly but loses heat at a relatively low rate to the cantilever. The high amplitude of the write mode pulse S_{W} is therefore required to heat the write heater to T_{W}, but this pulse is too short to cause significant heating of the read heater. In contrast, the read mode pulse S_{R} is sufficiently long to allow the read heater to heat to T_{R}, but the amplitude is too low to cause significant heating of the write heater. Hence, the thermal decoupling mechanism operates in both modes, allowing the component to be addressed in both modes via the single pair of supply lines R, C with only a single current path, containing both heaters, on the cantilever.

It will of course be appreciated that, while simple rectangular pulses are shown in Figure 10c to illustrate the operating principle, this is by no means essential. Various signal pulses which serve to supply, respectively, a relatively high power over a short period and a lower power over a longer period can be employed. Thus, the pulse "amplitude" referred to herein may be a mean or RMS amplitude for example, rather than a constant dc level as in the simple example of Figure 10c. Further, as will be apparent to those skilled in the art, various other cantilever designs can be envisaged here to provide the required thermal properties. In addition, in some embodiments, instead of using a read heater which actively heats to the read temperature T_{R} in the read mode of operation, the read sensor may simply be a thermal-resistive element which is heated primarily by heat loss from the write mode heater in the read mode. Moreover, various advantageous features of the electrically decoupled embodiments described above can be equally employed to advantage in thermally decoupled embodiments. For example, the mechanical amplification mechanism may be employed in some designs by locating the read sensor further from the pivot axis than the read/write tip. As a further example, read-sensing may be performed in some embodiments using the chip body as the heat sink as described above.

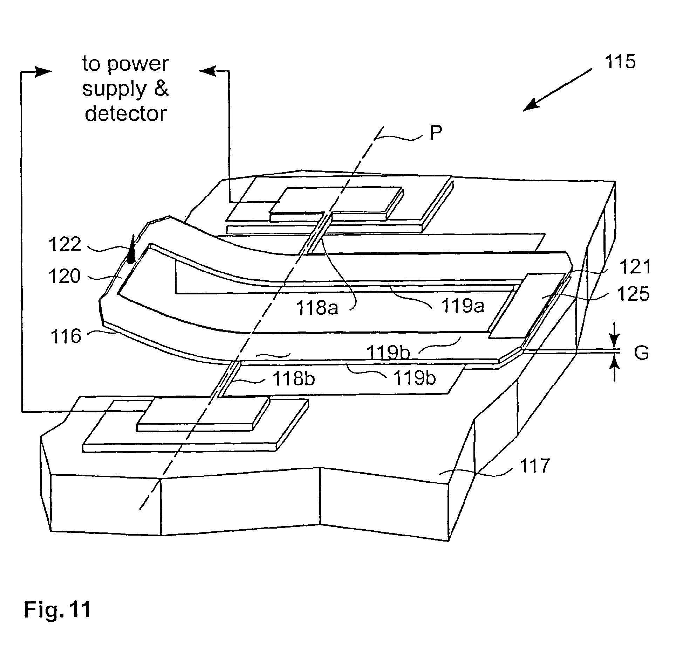

While the above has focused on data storage applications, the arrangements whereby part of the lever extends over part of the support structure around the lever can also be employed to advantage in AFM applications. The swing lever configuration is particularly preferred here, and Figure 11 illustrates an example of sensing apparatus employing this arrangement for use in the AFM of Figure 2. The sensing apparatus 115 here is generally similar to the read/write component of Figure 8, comprising a lever body 116 connected to a support structure 117 via torsional connection arms 118a, 118b for pivotal movement about a pivot axis P. Cantilever body 116 has two laterally disposed leg portions 119a, 119b interconnected at their ends by first and second bridging portions 120 and 121 respectively. A sensing tip 122 is centrally disposed on the first bridging portion 120, though no tip heater is required for AFM operation, pivotal movement of the lever body being induced, in use, through interaction of atomic forces between the tip and sample surface. The support structure 117 extends around the lever body as in Figure 8, and the second bridging portion 121 of the lever extends over part of the surrounding support structure to provide a small gap G which varies with pivotal movement of the lever. Thus, the AFM readout can be obtained here by detecting variations in the gap G during scanning of the sample by tip 122. Various sensor mechanisms can be employed to sense variations in the gap G, for example involving proximity sensor elements on one or both of the overlapping parts of the lever body and support structure as illustrated in Figures 9a to 9e. In this particularly preferred embodiment, however, thermal proximity sensing is performed as above by providing a heater 125 in the second bridging portion 121 of the lever body. The connection arms 118a, 118b, and the sections of the legs 119a, 119b between the connection arms and second bridging portion are therefore conductive, defining a current path for connection of the heater 125, via the support structure, to power supply and detection circuity as indicated in the figure Thus, during scanning by the sensing tip 122, the support structure serves as a heat sink for heater 125, the temperature, and hence resistance of the heater varying with variations in the gap G. The detector circuitry can monitor these variations as before, for example by detecting the voltage across a series resistor in the circuit to heater 125.

Since no heating of sensing tip 122 is required in this application, the sections of the legs 119a, 119b on the tip side of the lever body are formed to be highly resistive, thus providing means to inhibit current flow between the connection arms via the first bridging portion 120 during operation of heater 125. (Of course, the sensing tip could be otherwise isolated from the heater current, for example by forming all or part of the tip side of the lever body in oxide to prevent conduction, or decoupling diodes could be employed as above). The different properties of the various parts of the lever body are provided, as before, by appropriate doping of the semiconductor material during fabrication. The upwardly bent section of the lever body on the tip side, and the increased sensor-to-pivot axis distance here, provide the advantages explained earlier in relation to the data storage embodiments. Overall, therefore, this design provides a simple yet efficient and highly sensitive AFM sensor apparatus.

It will of course be appreciated that, while particularly preferred embodiments have been described in detail above, many changes and modifications can be made to these embodiments without departing from the scope of the invention as defined in the appended claims.

## Claims

1. A read/write component (30, 45, 50, 65, 80) for a data storage device (20), the read/write component comprising:
lever means (31, 51, 66, 82) and a support structure (32, 52, 67, 81), the lever means being connected to the support structure for substantially pivotal movement and providing first and second current paths between a pair of electrical supply lines (R,C) on the support structure via which the lever means is connectable, in use, to power supply means operable in a write mode and a read mode;
a write-mode heater (36, 47, 56, 73) provided on the lever means in the first current path;
a read/write tip (37, 57, 74, 84) provided on the write-mode heater;
a read-mode heater (39, 46, 58, 75, 83) provided on the lever means in the second current path; and
decoupling means (38a, 38b, 40a, 40b, 60, 61, 77a, 77b, 78a, 78b) arranged to inhibit current flow to the write-mode heater via the first current path in use when the power supply means is operated in the read mode.

2. A read/write component as claimed in claim 1 wherein the decoupling means (38a, 38b, 40a, 40b, 60, 61, 77a, 77b, 78a, 78b) is arranged additionally to inhibit current flow to the read-mode heater (39, 46, 58, 75, 83) via the second current path in use when the power supply means is operated in the write mode.

3. A read/write component as claimed in claim 2 wherein the decoupling means comprises write decoupling means (38a, 38b, 60, 77a, 77b) for inhibiting said current flow to the write-mode heater when the power supply means is operated in the read mode, and read decoupling means (40a, 40b, 61, 78a, 78b) for inhibiting said current flow to the read-mode heater when the power supply means is operated in the write mode.

4. A read/write component as claimed in any preceding claim wherein the lever means is configured as a cantilever (31, 51).

5. A read/write component as claimed in claim 4 wherein the read-mode heater (39, 46) is located further from the connection between the cantilever (31) and the support structure (32) than the write mode heater (36, 47).

6. A read/write component as claimed in claim 4 or claim 5 wherein:
the cantilever (31) comprises two laterally disposed leg portions (33a, 33b), connected at respective corresponding ends to the support structure (32), and first and second bridging portions (34, 35) each interconnecting the two leg portions;
the first bridging portion (34) comprises the write-mode heater (36) and the second bridging portion (35) comprises the read-mode heater (39);
the leg portions (33a, 33b) and the first bridging portion (34) define the first current path, and the leg portions (33a, 33b) and the second bridging portion (35) define the second current path; and
the decoupling means (38a, 38b, 40a, 40b) is located on the cantilever.

7. A read/write component as claimed in claim 6, when dependent on claim 3 and claim 5. wherein the write decoupling means (38a, 38b) is provided in the first current path on the first bridging portion (34), and the read decoupling means (40a, 40b) is provided in the second current path beyond the first bridging portion (34).

8. A read/write component as claimed in claim 4 wherein:
the cantilever (51) comprises three laterally disposed leg portions (53a, 53b, 53c), connected at respective corresponding ends to the support structure (52), a first bridging portion (54) interconnecting the central leg portion (53b) to a first of the outer leg portions (53a) and a second bridging portion (55) interconnecting the central leg portion (53b) to the second outer leg portion (53c);
the first bridging portion (54) comprises the write-mode heater (56) and the second bridging portion (55) comprises the read-mode heater (58);
the first outer leg portion (53a), the first bridging portion (54) and the central leg portion (53b) define the first current path;
the second outer leg portion (53c), the second bridging portion (55) and the central leg portion (53b) define the second current path; and
the decoupling means (60, 61) is located on the support structure (52).

9. A read/write component as claimed in claim 8 when dependent on claim 3, wherein the write decoupling means (60) is connected between a said supply line (R) and the first outer leg portion (53a), and the read decoupling means (61) is connected between that supply line (R) and the second outer leg portion (53c).

10. A read/write component as claimed in any one of claims 1 to 3 wherein the lever means comprises an elongate lever body (66, 82) and two connection arms (68a, 68b), extending outwardly from the lever body (66, 82) on either side thereof, connecting the lever body to the support structure (67, 81) and defining a pivot axis (P), offset from the ends of the lever body (66, 82), about which the lever body pivots in use, and wherein the write-mode heater (73) and read-mode heater (75, 82) are disposed on opposite sides of the pivot axis (P) at or near the ends of the lever body.

11. A read/write component as claimed in claim 10 wherein the read-mode heater (75, 83) is offset further from the pivot axis (P) than the write mode heater (73).

12. A read/write component as claimed in claim 10 or claim 11 wherein:
the lever body (66, 82) comprises two laterally disposed leg portions (70a, 70b), a first bridging portion (71) interconnecting the leg portions (70a, 70b) at or near one end of the lever body, and a second bridging portion (72) interconnecting the leg portions (70a, 70b) at or near the other end of the lever body;
the first bridging portion (71) comprises the write-mode heater (73) and the second bridging portion (72) comprises the read-mode heater (75);
the first current path is defined by the connection arms (68a, 68b), the sections of the leg portions (70a, 70b) between the connection arms and first bridging portion (71), and the first bridging portion (71);
the second current path is defined by the connection arms (68a, 68b), the sections of the leg portions (70a, 70b) between the connection arms and second bridging portion (72), and the second bridging portion (72); and
the decoupling means (77a, 77b, 78a, 78b) is provided on the lever body.

13. A read/write component as claimed in claim 12 when dependent on claim 3, wherein the write decoupling means (77a, 77b) is provided in the first current path between the connection arms (68a, 68b) and the write-mode heater (73), and the read decoupling means (78a, 78b) is provided in the second current path between the connection arms (68a, 68b) and the read-mode heater (75).

14. A read/write component as claimed in any one of claims 3, 7, 9 and 13 for use with power supply means which is arranged to apply a potential of one polarity between the supply lines (R, C) in the write mode and a potential of the opposite polarity between the supply lines (R, C) in the read mode, wherein:
the write decoupling means (38a, 38b, 61, 77a, 77b) is operative to inhibit current flow to the write-mode heater (36, 47, 56, 73) in the direction of current flow resulting from application of the read-mode potential, and the read decoupling means (48a, 48b, 60, 78a, 78b) is operative to inhibit current flow to the read-mode heater (39, 46, 58, 75, 83) in the direction of current flow resulting from application of the write-mode potential.

15. A read/write component as claimed in claim 14 wherein each of the write and read decoupling means comprises at least one diode.

16. A rcad/write component as claimed in claim 15, when dependent on claim 7 or claim 13, wherein each of the write and read decoupling means comprises a pair of diodes (38a, 38b, 40a, 40b, 77a, 77b, 78a, 78b) located so as to balance the lever means (31, 66) about a longitudinal axis thereof perpendicular to the axis of pivotal movement.

17. A read/write component as claimed in any one of claims 4 to 16 wherein the support structure (81) extends at least partially around the lever means (82) in a plane substantially parallel to the axis (P) of pivotal movement thereof, and wherein the read-mode heater (83) extends over a surface of the support structure (81) around the lever means to provide a gap (G) between the read-mode heater (83) and said surface, such that the thickness of the gap (G) varies with pivotal movement of the lever means.

18. A read/write component as claimed in claim 17 wherein the lever means (82) is shaped such that the write-mode heater is offset further than the read-mode heater, in the direction of the read/write tip (84), from the plane of said surface.

19. Read/write apparatus (22) for a data storage device (20), the apparatus comprising an array (22) of read/write components as claimed in any preceding claim, one supply line of each component being a row supply line (R) which is common to all components in the same row of the array (22), and the other supply line of each component being a column supply line (C) which is common to all components in the same column of the array (22).

20. A data storage device (20) comprising:
a data storage medium (21);
read/write apparatus as claimed in claim 19, the apparatus being positionable relative to a surface of the data storage medium (21) such that the read/write tip of each component in the array (22) is biased against the surface; and
power supply means (25) which is operable in said write mode and said read mode to apply a potential between the supply lines (R, C) of each component;
wherein said surface of the data storage medium (21) is such that, in use, heat transfer from the write-mode heater on application of a write-mode potential between the supply lines (R, C) of a said component causes local melting of the surface allowing penetration of the read/write tip to form a pit, whereas, on application of a read-mode potential between the supply lines (R, C), heat transfer from the read-mode heater of the component is insufficient to melt the surface.

21. A read/write component (100) for a data storage device (20), the read/write component (100) comprising:
lever means (101) and a support structure (102), the lever means being connected to the support structure for substantially pivotal movement and providing a current path between a pair of electrical supply lines (R, C) on the support structure;
a write-mode heater (105) provided on the lever means (101) in said current path;
a read/write tip (106) provided on the write-mode heater (105); and
a read-mode sensor (107) provided on the lever means (101) in said current path;
wherein the thermal properties of the write-mode heater (105) and adjacent regions (108, 109) of the lever means, and of the read-mode sensor (107) and adjacent regions (109, 110) of the lever means, are such that, by application of a first signal pulse (S_{W}) via the supply lines (R, C) in use, the write-mode heater (105) is heatable to a writing temperature T_{W} while the read-mode sensor (107) remains at a temperature less than T_{W}, and by application of a second signal pulse (S_{R}), which is of smaller amplitude and longer duration than the first signal pulse (S_{W}), via the supply lines (R, C) in use, the read-mode sensor (107) is heatable to a reading temperature T_{R} < T_{W} while the write-mode heater (105) remains at a temperature less than T_{W}.

22. Read/write apparatus (22) for a data storage device, the apparatus comprising an array (22) of read/write components (100) as claimed in claim 21, one supply line of each component being a row supply line (R) which is common to all components in the same row of the array (22), and the other supply line of each component being a column supply line (C) which is common to all components in the same column of the array (22).

23. A data storage device (20) comprising:
a data storage medium (21);
read/write apparatus (22) as claimed in claim 22, the apparatus being positionable relative to a surface of the data storage medium (21) such that the read/write tip (106) of each component (100) in the array is biased against the surface; and
power supply means (25) which is operable in a write mode to apply a said first signal pulse (S_{W}) to each component (100) via the supply lines (R, C) thereof, and in a read mode to apply a said second signal pulse (S_{R}) to each component (100) via the supply lines (R, C) thereof;
wherein said surface of the data storage medium (21) is such that, in use, on heating of the write-mode heater (105) of a said component to T_{W}, heat transfer from the write-mode heater (105) causes local melting of the surface allowing penetration of the read/write tip (106) to form a pit, whereas, on heating of the read-mode sensor (107) of the component to T_{R}, heat transfer from the read-mode sensor (107) is insufficient to melt the surface.

24. A read/write component (30, 45, 50, 65, 80) for a data storage device (20), the read/write component comprising:
lever means (31, 51, 66, 82) and a support structure (32, 52, 67, 81), the lever means being connected to the support structure for substantially pivotal movement and providing a first current path between a pair of electrical supply lines (R, C) on the support structure, wherein the support structure extends at least partially around the lever means in a plane substantially parallel to the axis (P) of said pivotal movement;
a write-mode heater (36, 47, 56, 73) provided on the lever means in the first current path;
a read/write tip (37, 57, 56, 84) provided on the write-mode heater;
a first proximity sensor element (91a, 91b, 92a, 92b) provided on a portion of the support structure around the lever means; and
a second proximity sensor element (90, 93) provided on the lever means and disposed over the first proximity sensor element such that the distance between the first and second proximity sensor elements varies with pivotal movement of the lever means;
wherein at least one of the lever means and support structure provides a second current path for coupling of the supply lines (R, C) via the first and second proximity sensor elements.

25. Read/write apparatus (22) for a data storage device (20), the apparatus comprising an array (22) of read/write components as claimed in claim 24, one supply line of each component being a row supply line (R) which is common to all components in the same row of the array, and the other supply line of each component being a column supply line (C) which is common to all components in the same column of the array.

26. A data storage device (20) comprising:
a data storage medium (21);
read/write apparatus (22) as claimed in claim 25, the apparatus being positionable relative to a surface of the data storage medium (21) such that the read/write tip of each component in the array is biased against the surface; and
power supply means (25) which is operable in a write mode and a read mode to apply a potential across the supply lines of each component;
wherein said surface of the data storage medium (21) is such that, in use, heat transfer from the write-mode heater on application of a write-mode potential across the supply lines (R, C) of a said component causes local melting of the surface allowing penetration of the read/write tip to form a pit.

27. Sensing apparatus (115) for an atomic force microscope, the apparatus comprising:
lever means (116) and a support structure (117), the lever means being connected to the support structure for substantially pivotal movement and the support structure (117) extending at least partially around the lever means (116) in a plane substantially parallel to the axis (P) of said pivotal movement; and
a sensing tip (122) provided on the lever means (116) such that interaction of atomic forces between the tip (122) and a sample (14) scanned thereby in use causes said pivotal movement of the lever means;
wherein part (125, 90, 93) of the lever means (116) extends over part of the support structure (117) around the lever means such that the distance (G) between said parts varies with said pivotal movement, whereby the topography of a sample (14) scanned by the tip in use is indicated by variations in said distance (G).

28. An atomic force microscope comprising:
sensing apparatus (115) as claimed in claim 27;
a sample support (15) for supporting a sample (14) in a position to be scanned by the sensing tip (122);
means (16) for effecting relative movement of the sample support (15) and sensing apparatus (115) for scanning of the sample (14) by the tip (122); and
means (25) for detecting variations in said distance (G) during scanning of a sample (14) to provide an output indicative of the topography of the sample.

## Patentansprüche

1. Schreib-/Lesekomponente (30, 45, 50, 65, 80) für eine Datenspeichervorrichtung (20), wobei die Schreib-/Lesekomponente Folgendes umfasst:
- Hebelmittel (31, 51, 66, 82) und eine Trägerstruktur (32, 52, 67, 81), wobei die Hebelmittel mit der Trägerstruktur verbunden sind, um im Wesentlichen eine Schwenkbewegung auszuführen und erste und zweite Strompfade zwischen einem Paar elektrischer Versorgungsleitungen (R, C) auf der Trägerstruktur bereitzustellen, über welche die Hebelmittel im Betrieb mit Stromversorgungsmitteln verbunden werden können, die in einem Schreibmodus und in einem Lesemodus betriebsfähig sind,
- eine Schreibmodusheizung (36, 47, 56, 73), die auf den Hebelmitteln im ersten Strompfad vorgesehen ist,
- eine Schreib-/Lesespitze (37, 57, 74, 84), die auf der Schreibmodusheizung vorgesehen ist,
- eine Lesemodusheizung (39, 46, 58, 75, 83), die auf den Hebelmitteln im zweiten Strompfad vorgesehen ist, und
- Entkopplungsmittel (38a, 38b, 40a, 40b, 60, 61, 77a, 77b, 78a, 78b), die dazu dienen, den Stromfluss über den ersten verwendeten Strompfad zur Schreibmodusheizung zu unterbinden, wenn die Stromversorgungsmittel im Lesemodus betrieben werden.

2. Schreib-/Lesekomponente nach Anspruch 1, bei der die Entkopplungsmittel (38a, 38b, 40a, 40b, 60, 61, 77a, 77b, 78a, 78b) außerdem dazu dienen, den Stromfluss zur Lesemodusheizung (39, 46, 58, 75, 83) über den verwendeten zweiten Strompfad zu unterbinden, wenn die Stromversorgungsmittel im Schreibmodus betrieben werden.

3. Schreib-/Lesekomponente nach Anspruch 2, bei der die Entkopplungsmittel Schreibentkopplungsmittel (38a, 38b, 60, 77a, 77b) umfassen, um den Stromfluss zur Schreibmodusheizung zu unterbinden, wenn die Stromversorgungsmittel im Lesemodus betrieben werden, sowie Leseentkopplungsmittel (40a, 40b, 61, 78a, 78b), um den Stromfluss zur Lesemodusheizung zu unterbinden, wenn die Stromversorgungsmittel im Schreibmodus betrieben werden.

4. Schreib-/Lesekomponente nach einem der vorhergehenden Ansprüche, bei der die Hebelmittel als Cantilever (31, 51) konfiguriert sind.

5. Schreib-/Lesekomponente nach Anspruch 4, bei der die Lesemodusheizung (39, 46) von der Verbindung zwischen dem Cantilever (31) und der Trägerstruktur (32) weiter entfernt angeordnet ist als die Schreibmodusheizung (36, 47).

6. Schreib-/Lesekomponente nach Anspruch 4 oder 5, bei der:
- der Cantilever (31) zwei seitlich angeordnete Schenkelteilbereiche (33a, 33b) umfasst, die an jeweils entsprechenden Enden der Trägerstruktur (32) verbunden sind, und erste und zweite Überbrückungsteilbereiche (34, 35), von denen jeder die zwei Schenkelteilbereiche miteinander verbindet,
- der erste Überbrückungsteilbereich (34) die Schreibmodusheizung (36) umfasst und der zweite Überbrückungsteilbereich (35) die Lesemodusheizung (39) umfasst,
- die Schenkelteilbereiche (33a, 33b) und der erste Überbrückungsteilbereich (34) den ersten Strompfad definieren und die Schenkelteilbereiche (33a, 33b) und der zweite Überbrückungsteilbereich (35) den zweiten Strompfad definieren und
- die Entkopplungsmittel (38a, 38b, 40a, 40b) auf dem Cantilever angeordnet sind.

7. Schreib-/Lesekomponente nach Anspruch 6, sofern von Anspruch 3 und Anspruch 5 abhängig, bei der die Schreibentkopplungsmittel (38a, 38b) im ersten Strompfad auf dem ersten Überbrückungsteilbereich (34) vorgesehen sind, und die Leseentkopplungsmittel (40a, 40b) im zweiten Strompfad jenseits des ersten Überbrückungsteilbereichs (34) vorgesehen sind.

8. Schreib-/Lesekomponente nach Anspruch 4, bei der:
- der Cantilever (51) drei seitlich angeordnete Schenkelteilbereiche (53a, 53b, 53c) umfasst, die an jeweils entsprechenden Enden mit der Trägerstruktur (52) verbunden sind, einen ersten Überbrückungsteilbereich (54), der den mittleren Schenkelteilbereich (53b) mit einem ersten der äußeren Schenkelteilbereiche (53a) verbindet, sowie einen zweiten Überbrückungsteilbereich (55), der den mittleren Schenkelteilbereich (53b) mit dem zweiten äußeren Schenkelteilbereich (53c) verbindet,
- der erste Überbrückungsteilbereich (54) die Schreibmodusheizung (56) umfasst und der zweite Überbrückungsteilbereich (55) die Lesemodusheizung (58) umfasst,
- der erste äußere Schenkelteilbereich (53a), der erste Überbrückungsteilbereich (54) und der mittlere Schenkelteilbereich (53b) den ersten Strompfad definieren,
- der zweite äußere Schenkelteilbereich (53c), der zweite Überbrückungsteilbereich (55) und der mittlere Schenkelteilbereich (53b) den zweiten Strompfad definieren und
- die Entkopplungsmittel (60, 61) auf der Trägerstruktur (52) angeordnet sind.

9. Schreib-/Lesekomponente nach Anspruch 8, sofern von Anspruch 3 abhängig, bei der die Schreibentkopplungsmittel (60) zwischen die Versorgungsleitung (R) und den ersten äußeren Schenkelteilbereich (53a) geschaltet sind, und die Leseentkopplungsmittel (61) zwischen diese Versorgungsleitung (R) und den zweiten äußeren Schenkelteilbereich (53c) geschaltet sind.

10. Schreib-/Lesekomponente nach einem der Ansprüche 1 bis 3, bei der die Hebelmittel einen länglichen Hebelkörper (66, 82) und zwei Verbindungsarme (68a, 68b) umfassen, die sich an beiden Seiten des Hebelkörpers (66, 82) nach außen erstrecken, den Hebelkörper mit der Trägerstruktur (67, 81) verbinden und versetzt von den Enden des Hebelkörpers (66, 82) eine Schwenkachse (P) definieren, um die der Hebelkörper im Betrieb schwenkt, und bei der die Schreibmodusheizung (73) und die Lesemodusheizung (75, 82) an gegenüberliegenden Seiten der Schwenkachse (P) an den oder nahe den Enden des Hebelkörpers angeordnet sind.

11. Schreib-/Lesekomponente nach Anspruch 10, bei der die Lesemodusheizung (75, 83) weiter von der Schwenkachse (P) versetzt ist als die Schreibmodusheizung (73).

12. Schreib-/Lesekomponente nach Anspruch 10 oder 11, bei der:
- der Hebelkörper (66, 82) zwei seitlich angeordnete Schenkelteilbereiche (70a, 70b), einen ersten Überbrückungsteilbereich (71), der die Schenkelteilbereiche (70a, 70b) an oder nahe dem einen Ende des Hebelkörpers miteinander verbindet, sowie einen zweiten Überbrückungsteilbereich (72) der die Schenkelteilbereiche (70a, 70b) an oder nahe dem anderen Ende des Hebelkörpers miteinander verbindet, umfasst,
- der erste Überbrückungsteilbereich (71) die Schreibmodusheizung (73) umfasst und der zweite Überbrückungsteilbereich (72) die Lesemodusheizung (75) umfasst,
- der erste Strompfad durch die Verbindungsarme (68a, 68b), die Abschnitte der Schenkelteilbereiche (70a, 70b) zwischen den Verbindungsarmen und dem ersten Überbrückungsteilbereich (71) sowie den ersten Überbrückungsteilbereich (71) definiert ist,
- der zweite Strompfad durch die Verbindungsarme (68a, 68b), die Abschnitte der Schenkelteilbereiche (70a, 70b) zwischen den Verbindungsarmen und dem zweiten Überbrückungsteilbereich (72) und den zweiten Überbrückungsteilbereich (72) definiert ist und
- die Entkopplungsmittel (77a, 77b, 78a, 78b) auf dem Hebelkörper vorgesehen sind.

13. Schreib-/Lesekomponente nach Anspruch 12, sofern von Anspruch 3 abhängig, bei der die Schreibentkopplungsmittel (77a, 77b) im ersten Strompfad zwischen den Verbindungsarmen (68a, 68b) und der Schreibmodusheizung (73) vorgesehen sind, und die Leseentkopplungsmittel (78a, 78b) im zweiten Strompfad zwischen den Verbindungsarmen (68a, 68b) und der Lesemodusheizung (75) vorgesehen sind.

14. Schreib-/Lesekomponente nach einem der Ansprüche 3, 7, 9 und 13 für die Verwendung mit Stromversorgungsmitteln, die dazu dienen, im Schreibmodus ein Potential einer Polarität zwischen den Versorgungsleitungen (R, C) und im Lesemodus ein Potential der entgegengesetzten Polarität zwischen den Versorgungsleitungen (R, C) anzulegen, wobei:
- die Schreibentkopplungsmittel (38a, 38b, 61, 77a, 77b) ausgebildet sind, um den Stromfluss zur Schreibmodusheizung (36, 47, 56, 73) in der Richtung des Stromflusses zu unterbinden, der aus dem Anlegen des Lesemoduspotentials resultiert, und die Leseentkopplungsmittel (48a, 48b, 60, 78a, 78b) ausgebildet sind, um den Stromfluss zur Lesemodusheizung (39, 46, 58, 75, 83) in der Richtung des Stromflusses zu unterbinden, der aus dem Anlegen des Schreibmoduspotentials resultiert.

15. Schreib-/Lesekomponente nach Anspruch 14, bei der jedes der Schreib- und Leseentkopplungsmittel mindestens eine Diode umfasst.

16. Schreib-/Lesekomponente nach Anspruch 15, sofern von Anspruch 7 oder Anspruch 13 abhängig, bei der jedes der Schreib- und Leseentkopplungsmittel ein Diodenpaar (38a, 38b, 40a, 40b, 77a, 77b, 78a, 78b) umfasst, dass so angeordnet ist, dass die Hebelmittel (31, 66) um deren Längsachse ausbalanciert sind, die rechtwinklig zur Achse der Schwenkbewegung ist.

17. Schreib-/Lesekomponente nach einem der Ansprüche 4 bis 16, bei der sich die Trägerstruktur (81) zumindest teilweise um die Hebelmittel (82) herum in einer Ebene erstrecken, die im Wesentlichen parallel zur Achse (P) der Schwenkbewegung verläuft, und bei der sich die Lesemodusheizung (83) über eine Oberfläche der Trägerstruktur (81) um die Hebelmittel herum erstreckt, um einen Spalt (G) zwischen der Lesemodusheizung (83) und der Oberfläche in der Weise bereitzustellen, dass die Breite des Spalts (G) mit der Schwenkbewegung der Hebelmittel variiert.

18. Schreib-/Lesekomponente nach Anspruch 17, bei der die Hebelmittel (82) so geformt sind, dass die Schreibmodusheizung von der Ebene der Oberfläche weiter in Richtung der Schreib-/Lesespitze (84) versetzt ist als die Lesemodusheizung.

19. Schreib-/Leseeinrichtung (22) für eine Datenspeichervorrichtung (20), wobei die Einrichtung eine Matrix (22) von Schreib-/Lesekomponenten nach einem der vorhergehenden Ansprüche umfasst, wobei es sich bei einer Versorgungsleitung jeder Komponente um eine Zeilenversorgungsleitung (R) handelt, die allen Komponenten in derselben Reihe der Matrix (22) gemeinsam ist, und bei der anderen Versorgungsleitung jeder Komponente um eine Spaltenversorgungsleitung (C) handelt, die allen Komponenten in derselben Spalte der Matrix (22) gemeinsam ist.

20. Datenspeichervorrichtung (20), die Folgendes umfasst:
- ein Datenspeichermedium (21),
- Schreib-/Leseeinrichtung nach Anspruch 19, wobei die Einrichtung relativ zu einer Oberfläche des Datenspeichermediums (21) in der Weise positioniert werden kann, dass die Schreib-/Lesespitze jeder Komponente in der Matrix (22) gegenüber der Oberfläche vorgespannt ist und
- Stromversorgungsmittel (25), die betriebsfähig sind, um im Schreibmodus und im Lesemodus ein Potential zwischen den Versorgungsleitungen (R, C) jeder Komponente anzulegen,
wobei die Oberfläche des Datenspeichermediums (21) so beschaffen ist, dass im Betrieb beim Anlegen eines Schreibmoduspotentials zwischen den Versorgungsleitungen (R, C) einer Komponente der Wärmetransfer von der Schreibmodusheizung ein lokales Schmelzen der Oberfläche bewirkt, wodurch das Eindringen der Schreib-/Lesespitze ermöglicht wird, um eine Einkerbung zu bilden, wohingegen beim Anlegen eines Lesemoduspotentials zwischen den Versorgungsleitungen (R, C) der Wärmetransfer von der Lesemodusheizung der Komponente nicht ausreicht, um die Oberfläche zu schmelzen.

21. Schreib-/Lesekomponente (100) für eine Datenspeichervorrichtung (20), wobei die Schreib-/Lesekomponente (100) Folgendes umfasst:
- Hebelmittel (101) und eine Trägerstruktur (102), wobei die Hebelmittel mit der Trägerstruktur verbunden sind, um im Wesentlichen eine Schwenkbewegung auszuführen und einen Strompfad zwischen einem Paar elektrischer Versorgungsleitungen (R, C) auf der Trägerstruktur bereitzustellen,
- eine Schreibmodusheizung (105), die auf den Hebelmitteln (101) im Strompfad vorgesehen ist,
- eine Schreib-/Lesespitze (106), die auf der Schreibmodusheizung (105) vorgesehen ist, und
- einen Lesemodussensor (107), der auf den Hebelmitteln (101) im Strompfad vorgesehen ist,
wobei die thermischen Eigenschaften der Schreibmodusheizung (105) und angrenzender Bereiche (108, 109) der Hebelmittel sowie des Lesemodussensors (107) und angrenzender Bereiche (109, 110) der Hebelmittel so beschaffen sind, dass durch Anlegen eines ersten Signalimpulses (S_{W}) über die verwendeten Versorgungsleitungen (R, C) die Schreibmodusheizung (105) auf eine Schreibtemperatur T_{W} aufgeheizt werden kann, während die Temperatur des Lesemodussensors unter T_{W} bleibt, und durch Anlegen eines zweiten Signalimpulses (S_{R}), der eine kleinere Amplitude und eine größere Dauer als der erste Signalimpuls (S_{W}) aufweist, über die verwendeten Versorgungsleitungen (R, C) der Lesemodussensor (107) auf eine Lesetemperatur T_{R}< T_{W} aufgeheizt werden kann, während die Temperatur der Schreibmodusheizung (105) unter T_{W} bleibt.

22. Schreib-/Leseeinrichtung (22) für eine Datenspeichervorrichtung, wobei die Einrichtung eine Matrix (22) von Schreib-/Lesekomponenten (100) nach Anspruch 21 umfasst, wobei es sich bei einer Versorgungsleitung jeder Komponente um eine Zeilenversorgungsleitung (R) handelt, die allen Komponenten in derselben Reihe der Matrix (22) gemeinsam ist, und bei der anderen Versorgungsleitung jeder Komponente um eine Spaltenversorgungsleitung (C) handelt, die allen Komponenten in derselben Spalte der Matrix (22) gemeinsam ist.

23. Datenspeichervorrichtung (20), die Folgendes umfasst:
- ein Datenspeichermedium (21),
- Schreib-/Leseeinrichtung (22) nach Anspruch 22, wobei die Einrichtung relativ zu einer Oberfläche des Datenspeichermediums (21) in der Weise positioniert werden kann, dass die Schreib-/Lesespitze (106) jeder Komponente (100) in der Matrix gegenüber der Oberfläche vorgespannt ist, und
- Stromversorgungsmittel (25), die betriebsfähig sind, um im Schreibmodus an jede Komponente (100) über deren Versorgungsleitungen (R, C) einen ersten Signalimpuls (S_{W}) anzulegen, und um im Lesemodus an jede Komponente (100) über deren Versorgungsleitungen (R, C) einen zweiten Signalimpuls (S_{R}) anzulegen,
wobei die Oberfläche des Datenspeichermediums (21) so beschaffen ist, dass im Betrieb beim Aufheizen der Schreibmodusheizung (105) der Komponente auf T_{W} der Wärmetransfer von der Schreibmodusheizung (105) ein lokales Schmelzen der Oberfläche bewirkt, wodurch das Eindringen der Schreib-/Lesespitze (106) ermöglicht wird, um eine Einkerbung zu bilden, wohingegen beim Aufheizen des Lesemodussensors (107) der Komponente auf T_{R} der Wärmetransfer vom Lesemodussensor (107) nicht ausreicht, um die Oberfläche zu schmelzen.

24. Schreib-/Lesekomponente (30, 45, 50, 65, 80) für eine Datenspeichervorrichtung (20), wobei die Schreib-/Lesekomponente Folgendes umfasst:
- Hebelmittel (31, 51, 66, 82) und eine Trägerstruktur (32, 52, 67, 81), wobei die Hebelmittel mit der Trägerstruktur verbunden sind, um im Wesentlichen eine Schwenkbewegung auszuführen und einen ersten Strompfad zwischen einem Paar elektrischer Versorgungsleitungen (R, C) auf der Trägerstruktur bereitzustellen, wobei sich die Trägerstruktur zumindest teilweise um die Hebelmittel herum in einer Ebene erstreckt, die im Wesentlichen parallel zur Achse (P) der Schwenkbewegung verläuft,
- eine Schreibmodusheizung (36, 47, 56, 73), die auf den Hebelmitteln im ersten Strompfad vorgesehen ist,
- eine Schreib-/Lesespitze (37, 57, 74, 84), die auf der Schreibmodusheizung vorgesehen ist,
- ein erstes Näherungssensorelement (91a, 91b, 92a, 92b), das auf einem Teilbereich der Trägerstruktur um die Hebelmittel herum vorgesehen ist, und
- ein zweites Näherungssensorelement (90, 93), das auf den Hebelmitteln vorgesehen und so über dem ersten Näherungssensorelement angeordnet ist, dass der Abstand zwischen dem ersten und zweiten Näherungssensorelement mit der Schwenkbewegung der Hebelmittel variiert,
wobei mindestens eines der Hebelmittel und die Trägerstruktur einen zweiten Strompfad zum Koppeln der Versorgungsleitungen (R, C) über das erste und zweite Näherungssensorelement bereitstellen.

25. Schreib-/Leseeinrichtung (22) für eine Datenspeichervorrichtung (20), wobei die Einrichtung eine Matrix (22) aus Schreib-/Lesekomponenten nach Anspruch 24 umfasst, wobei es sich bei einer Versorgungsleitung jeder Komponente um eine Zeilenversorgungsleitung (R) handelt, die allen Komponenten in derselben Reihe der Matrix gemeinsam ist, und bei der anderen Versorgungsleitung jeder Komponente um eine Spaltenversorgungsleitung (C) handelt, die allen Komponenten in derselben Spalte der Matrix gemeinsam ist.

26. Datenspeichervorrichtung (20), die Folgendes umfasst:
- ein Datenspeichermedium (21),
- Schreib-/Leseeinrichtung (22) nach Anspruch 25, wobei die Einrichtung relativ zu einer Oberfläche des Datenspeichermediums (21) in der Weise positioniert werden kann, dass die Schreib-/Lesespitze jeder Komponente in der Matrix gegenüber der Oberfläche vorgespannt ist, und
- Stromversorgungsmittel (25), die betriebsfähig sind, um in einem Schreibmodus und in einem Lesemodus ein Potential an die Versorgungsleitungen jeder Komponente anzulegen,
wobei die Oberfläche des Datenspeichermediums (21) so beschaffen ist, dass im Betrieb beim Anlegen eines Schreibmoduspotentials an die Versorgungsleitungen (R, C) der Komponente der Wärmetransfer von der Schreibmodusheizung ein lokales Schmelzen der Oberfläche bewirkt, wodurch das Eindringen der Schreib-/Lesespitze ermöglicht wird, um eine Einkerbung zu bilden.

27. Abtasteinrichtung (115) für ein Rasterkraftmikroskop, wobei die Einrichtung Folgendes umfasst:
- Hebelmittel (116) und eine Trägerstruktur (117), wobei die Hebelmittel mit der Trägerstruktur verbunden sind, um im Wesentlichen eine Schwenkbewegung auszuführen und sich die Trägerstruktur (117) zumindest teilweise um die Hebelmittel (116) herum in einer Ebene erstreckt, die im Wesentlichen parallel zur Achse (P) der Schwenkbewegung verläuft, und
- eine Abtastspitze (122), die in der Weise an den Hebelmitteln (116) vorgesehen ist, dass die Interaktion von Atomkräften zwischen der Spitze (122) und einer von ihr abgetasteten Probe (14) im Betrieb diese Schwenkbewegung der Hebelmittel verursacht,
wobei sich ein Teil (125, 90, 93) der Hebelmittel (116) so über einen Teil der Trägerstruktur (117) um die Hebelmittel herum erstreckt, dass der Abstand (G) zwischen diesen Teilen mit der Schwenkbewegung variiert, wodurch die Topografie einer durch die verwendete Spitze abgetasteten Probe (14) durch Änderungen des Abstands (G) angezeigt wird.

28. Rasterkraftmikroskop, das Folgendes umfasst:
- Abtasteinrichtung (115) nach Anspruch 27,
- einen Probenträger (15) zum Platzieren einer Probe (14) in einer von der Abtastspitze (122) abzutastenden Position,
- Mittel (16), um eine relative Bewegung des Probenträgers (15) und der Abtasteinrichtung (115) zum Abtasten der Probe (14) durch die Spitze (122) zu bewirken, und
- Mittel (25) zum Detektieren von Änderungen des Abstands (G) während des Abtastens einer Probe (14), um eine Ausgabe bereitzustellen, welche die Topografie der Probe anzeigt.

## Revendications

1. Un composant de lecture/écriture (30, 45, 50, 65, 80) pour un dispositif de stockage de données (20), le composant de lecture/écriture comprenant :
des moyens formant levier (31, 51, 66, 82) et une structure support (32, 52, 67, 81), les moyens formant levier étant reliés à la structure support pour effectuer essentiellement un mouvement de pivotement et fournir des premier et deuxième chemins de courant entre une paire de lignes d'alimentation électrique (R, C) sur la structure support, via lesquelles les moyens formant levier sont raccordables, en utilisation, à des moyens d'alimentation en énergie, susceptibles de fonctionner en un mode d'écriture et en un mode de lecture ;
un élément chauffant en mode écriture (36, 47, 56, 73) prévu sur les moyens formant levier, dans le premier chemin de courant ;
un embout de lecture/écriture (37, 57, 74, 84), prévu sur l'élément chauffant de mode écriture ;
un élément chauffant de mode lecture (39, 46, 58, 75, 83), prévu sur les moyens formant levier dans le deuxième chemin de courant ; et
des moyens de désaccouplement (38a, 38b, 40a, 40b, 60, 61, 77a, 77b, 78a, 78b) agencés pour inhiber le passage de courant vers l'élément chauffant de mode écriture, via le premier chemin de courant, en utilisation, lorsque les moyens d'alimentation en énergie fonctionnent en mode lecture.

2. Un composant de lecture/écriture tel que revendiqué à la revendication 1, dans lequel les moyens de désaccouplement (38a, 38b, 40a, 40b, 60, 61, 77a, 77b, 78a, 78b) sont agencés additionnellement pour inhiber le passage de courant vers l'élément chauffant de mode de lecture (39, 46, 58, 75, 83), via le deuxième chemin de courant, en utilisation, lorsque les moyens de fourniture d'énergie fonctionnent en mode écriture.

3. Un composant de lecture/écriture selon la revendication 2, dans lequel les moyens de désaccouplement comprennent des moyens de désaccouplement d'écriture (38a, 38b, 60, 77a, 77b), pour inhiber ledit passage de courant vers ledit élément chauffant de mode écriture, lorsque les moyens d'alimentation en énergie sont exploités en mode lecture, et des moyens de désaccouplement de lecture (40a, 40b, 61, 78a, 78b), pour inhiber ledit passage de courant audit élément chauffant de mode lecture lorsque les moyens d'alimentation en puissance fonctionnement en mode écriture.

4. Un composant de lecture/écriture selon l'une quelconque des revendications précédentes, dans lequel les moyens formant levier sont configurés sous forme de levier en porte-à-faux (31, 51).

5. Un composant de lecture/écriture selon la revendication 4, dans lequel l'élément chauffant en mode lecture (39, 46) est placé plus à l'écart de la connexion entre l'élément en porte-à-faux (31) et la structure support (32) que l'élément chauffant en mode écriture (36, 47).

6. Un composant de lecture/écriture selon la revendication 4 ou la revendication 5, dans lequel :
l'élément en porte-à-faux (31) comprend deux parties formant patte (33a, 33b) disposées latéralement, connectées à des extrémités correspondantes respectives sur la structure support (32), et des premières et deuxièmes parties de pontage (34, 35) connectant chacune les deux parties formant patte ;
la première partie de pontage (34) comprend l'élément chauffant en mode écriture (36), et la deuxième partie de pontage (35) comprend l'élément chauffant en mode lecture (39) ;
les parties formant patte (33a, 33b) et la première partie de pontage (34) définissent le premier chemin de courant, et les parties formant patte (33a, 33b) et la deuxième partie de pontage (35) définissent le deuxième chemin de courant ; et
les moyens de désaccouplement (38a, 38b, 40a, 40b) sont situés sur l'élément en porte-à-faux.

7. Un composant de lecture/écriture selon la revendication 6, dépendant de la revendication 3 et de la revendication 5, dans lequel les moyens de désaccouplement en écriture (38a, 38b) sont prévus dans le premier chemin de courant, sur la première partie de pontage (34), et les moyens de désaccouplement en lecture (40a, 40b) sont prévus dans le deuxième chemin de courant, au-delà de la première partie de pontage (34).

8. Un composant de lecture/écriture selon la revendication 4, dans lequel:
l'élément en porte-à-faux (51) comprend trois parties formant patte (53a, 53b, 53c) disposées latéralement, reliées à des extrémités correspondantes respectives à la structure support (52), une première partie de pontage (54) interconnectant la partie formant patte centrale (53b) à une première des parties formant patte extérieures (53a), et une deuxième partie de pontage (55) interconnectant la partie formant patte centrale (53b) à la deuxième partie formant patte extérieure (53c) ;
la première partie de pontage (54) comprend l'élément chauffant en mode écriture (56) et la deuxième partie de pontage (55) comprend l'élément chauffant en mode lecture (58) ;
la première partie formant patte extérieure (53a), ,la première partie de pontage (54) et la partie formant patte centrale (53b) définissent le premier chemin de courant ;
la deuxième partie formant patte extérieure (53c), la deuxième partie de pontage (55) et la partie formant patte centrale (53b) définissent le deuxième chemin de courant ; et
les moyens de désaccouplement (60, 61) sont situés sur la structure support (52).

9. Un composant de lecture/écriture selon la revendication 8, dépendant de la revendication 3, dans lequel les moyens de découplage en écriture (60) sont connectés entre une dite ligne d'alimentation (R) et la première partie formant patte extérieure (53a), et les moyens de découplage en lecture (61) sont connectés entre cette ligne d'alimentation (R) et la deuxième partie formant patte extérieure (53c).

10. Un composant de lecture/écriture selon l'une quelconque des revendications 1 à 3, dans lequel les moyens formant levier comprennent un corps de levier (66, 82) allongé et deux bras de connexion (68a, 68b), s'étendant extérieurement depuis le corps de levier (66, 82), de chaque côté de celui-ci, connectant le corps de levier à la structure support (67, 81) et définissant un axe de pivotement (P) décalé des extrémités du corps de levier (66, 82) autour duquel le corps de levier pivote en utilisation, et dans lequel l'élément chauffant en mode en écriture (73) et l'élément chauffant en mode en lecture (75, 82) sont disposés sur des côtés opposés de l'axe de pivotement (P), à ou près des extrémités du corps de levier.

11. Un composant de lecture/écriture selon la revendication 10, dans lequel l'élément chauffant en mode en lecture (75, 83) est plus à l'écart de l'axe de pivotement (P) que l'élément chauffant en mode en lecture (73).

12. Un composant de lecture/écriture selon la revendication 10 ou la revendication 11, dans lequel :
le corps de levier (66, 82) comprend deux parties formant patte (70a, 70b) disposées latéralement, une première partie de pontage (71) interconnectant les parties formant patte (70a, 70b) à ou près d'une extrémité du corps de levier, et une deuxième partie de pontage (72) interconnectant les parties formant patte (70a, 70b) à ou près de l'autre extrémité du corps de levier ;
la première partie de pontage (71) comprend l'élément chauffant en mode en écriture (73), et la deuxième partie de pontage (72) comprend l'élément chauffant en mode en lecture (75) ;
le premier chemin de courant est défini par les bras de connexion (68a, 68b), les sections des parties formant patte (70a, 70b) entre les bras de connexion et la première partie de pontage (71), et la première partie de pontage (71) ;
le deuxième chemin de courant est défini par les bras de connexion (68a, 68b), les sections des parties formant patte (70a, 70b) entre les bras de connexion et la deuxième partie de pontage (72), et la deuxième partie de pontage (72) ; et
les moyens de désaccouplement (77a, 77b, 78a, 78b) sont prévus sur le corps de levier.

13. Un composant de lecture/écriture selon la revendication 12 dépendant de la revendication 3, dans lequel les moyens de désaccouplement en écriture (77a, 77b) sont prévus dans le premier chemin de courant, entre les bras de connexion (68a, 68b) et l'élément chauffant en mode en écriture (73), et les moyens de désaccouplement en lecture (78a, 78b) sont prévus dans le deuxième chemin de courant, entre les bras de connexion (68a, 68b) et l'élément chauffant en mode en lecture (75).

14. Un composant de lecture/écriture tel que revendiqué à l'une quelconque des revendications 3, 7, 9 et 13 pour utilisation avec des moyens d'alimentation en énergie, agencés pour appliquer un potentiel d'une polarité entre les lignes d'alimentation (R, C) dans le mode en écriture, et un potentiel de polarité opposé entre les lignes d'alimentation (R, C) en mode en lecture, dans lequel:
les moyens de désaccouplement en écriture (38a, 38b, 61, 77a, 77b) fonctionnent pour inhiber le passage de courant vers l'élément chauffant en mode en écriture (36, 47, 56, 73), dans le sens de passage du courant résultat de l'application du potentiel en mode en lecture, et les moyens de désaccouplement en lecture (48a, 48b, 60, 78a, 78b) fonctionnent pour inhiber le passage de courant vers l'élément chauffant en mode en lecture (39, 46, 58, 75, 83) dans le sens de passage du courant résultant de l'application du potentiel en mode en écriture.

15. Un composant de lecture/écriture tel que revendiqué à la revendication 14, dans lequel chacun des moyens de désaccouplement en écriture et en lecture comprend au moins une diode.

16. Un composant de lecture/écriture tel que revendiqué à la revendication 15, dépendant de la revendication 7 ou de la revendication 13, dans lequel chacun des moyens de désaccouplement en écriture et en lecture comprend une paire de diodes (38a, 38b, 40a, 40b, 60, 61, 77a, 77b, 78a, 78b) situées de manière à équilibrer les moyens formant levier (31, 66) autour de leur axe longitudinal, perpendiculaire à l'axe du mouvement de pivotement.

17. Un composant de lecture/écriture tel que revendiqué à l'une quelconque des revendications 4 à 16, dans lequel la structure support (81) s'étend au moins partiellement autour des moyens formant levier (82), dans un plan sensiblement parallèle à l'axe (P) de son mouvement de pivotement, et dans lequel l'élément chauffant en mode en lecture (83) s'étend sur une surface de la structure support (81), autour des moyens formant levier, pour fournir un intervalle (G) entre l'élément chauffant en mode en lecture (83) et ladite surface, de manière que l'épaisseur de l'intervalle (G) varie avec le mouvement de pivotement des moyens formant levier.

18. Un composant de lecture/écriture tel que revendiqué à la revendication 17, dans lequel les moyens formant levier (82) sont conformés de manière que l'élément chauffant en mode en écriture soit plus à l'écart de l'élément chauffant en mode lecture, dans le sens de l'embout de lecture/écriture (84), depuis le plan de ladite surface.

19. Un appareil de lecture/écriture pour un dispositif de stockage de données (20), l'appareil comprenant une matrice (22) de composants de lecture/écriture tel que revendiqué à l'une quelconque des revendications précédentes, une ligne d'alimentation de chaque composant étant une ligne d'alimentation de ligne (R), commune à la totalité des composants situés dans la même ligne de la matrice (22), et l'autre ligne d'alimentation de chaque composant étant une ligne d'alimentation de colonne (C), commune à la totalité des composants dans la même colonne de la matrice (22).

20. Un dispositif de stockage de données (20) comprenant:
un support de stockage de données (21);
un appareil de lecture/écriture, tel que revendiqué à la revendication 19, l'appareil étant susceptible d'être positionné par rapport à une surface du support de stockage de données (21), de manière que l'embout de lecture/écriture de chaque composant dans la matrice (22) soit placé contre la surface ; et
des moyens d'alimentation en énergie (25), susceptibles de fonctionner dans ledit mode en écriture et dans ledit mode en lecture, pour appliquer un potentiel entre les lignes d'alimentation (R, C) de chaque composant ;
dans lequel ladite surface du support de stockage de données (21) est telle que, en utilisation, un transfert de chaleur depuis l'élément chauffant en mode en écriture, à l'application d'un potentiel de mode en écriture, entre les lignes d'alimentation (R, C) d'un dit composant, provoque une fusion locale de la surface, permettant la pénétration de l'embout de lecture/écriture pour former un cratère, tandis que, à l'application d'un potentiel en mode en lecture entre les lignes d'alimentation (R, C), un transfert de chaleur depuis l'élément chauffant en mode en lecture du composant est insuffisant pour faire fondre la surface.

21. Un composant de lecture/écriture (100) pour un dispositif de stockage de données (20), le composant de lecture/écriture (100) comprenant:
des moyens formant levier (120) et une structure support (102), les moyens formant levier étant connectés à la structure support pour effectuer sensiblement un mouvement de pivotement et fournir un chemin de courant entre une paire de lignes d'alimentation électrique (R, C) sur la structure support ;
un élément chauffant en mode écriture (105), prévu sur les moyens formant levier (101) dans le premier chemin de courant ;
un embout de lecture/écriture (106), prévu sur l'élément chauffant en mode en écriture (105) ; et
un capteur en mode de lecture (107), prévu sur les moyens formant levier (101) dans le deuxième chemin de courant ;
dans lequel les propriétés thermiques de l'élément chauffant en mode en écriture (105) et des régions (108, 109), adjacentes, des moyens formant levier, et du capteur en mode en lecture (107) et des régions (109, 110) adjacentes des moyens formant levier, sont telles que, par application d'une première impulsion de signal (S_{W}) via les lignes d'alimentation (R, C) en utilisation, l'élément chauffant en mode en écriture (105) est susceptible d'être chauffé à une température d'écriture T_{W}, tandis que le capteur en mode en lecture (107) reste à une température inférieure à T_{W}, et que, par application d'une deuxième impulsion de signal (S_{R}), de plus petite amplitude et de plus longue durée que la première impulsion de signal (S_{W}), via les lignes d'alimentation (R, C) en utilisation, le capteur en mode lecture (107) est susceptible d'être chauffé à une température de lecture T_{R} < T_{W}, l'élément chauffant en mode en écriture (105) restant à une température inférieure à T_{W}.

22. Un appareil de lecture/écriture (22) pour un dispositif de stockage de données, l'appareil comprenant une matrice (22) de composants de lecture/écriture (100) tel que revendiqué à la revendication 21, une ligne d'alimentation de chaque composant étant une ligne d'alimentation de ligne (R), commune à la totalité des composants situés dans la même ligne de la matrice (22), et l'autre ligne d'alimentation de chaque composant étant une ligne d'alimentation de colonne (C), commune à tous les composants dans la même colonne de la matrice (22).

23. Un dispositif de stockage de données (20) comprenant :
un support de stockage de données (21) ;
un appareil de lecture/écriture, tel que revendiqué à la revendication 22, l'appareil étant susceptible d'être positionné par rapport à une surface du support de stockage de données (21), de manière que l'embout de lecture/écriture (106) de chaque composant (100) dans la matrice soit sollicité contre la surface ; et
des moyens d'alimentation en énergie (25), susceptibles de fonctionner en un mode en écriture, pour appliquer une première impulsion de signal (S_{W}) à chaque composant (100) via les lignes d'alimentation (R, C) de celui-ci, et, en un mode en lecture, d'appliquer une dite deuxième impulsion de signal (S_{R}), à chaque composant (100) via les lignes d'alimentation (R, C) de celui-ci ;
dans lequel ladite surface du support de stockage de données (21) est telle que, en utilisation, lors du chauffage de l'élément chauffant en mode en écriture (105) d'un dit composant à T_{W}, un transfert de chaleur dudit élément chauffant en mode en écriture (105) provoque une fusion locale de la surface, permettant la pénétration de l'embout de lecture/écriture (106) pour former un cratère, tandis que, lors du chauffage du capteur de mode en lecture (107) du composant T_{R}, un transfert de chaleur du capteur en mode en lecture (107) est insuffisant pour faire fondre la surface.

24. Un composant de lecture/écriture (30, 45, 50, 65, 80) pour un dispositif de stockage de données (20), le composant de lecture/écriture comprenant :
des moyens formant levier (31, 51, 66, 82) et une structure support (32, 52, 67, 81), les moyens formant levier étant connectés à la structure support pour effectuer essentiellement un mouvement de pivotement et fournir un premier chemin de courant entre une paire de lignes d'alimentation électrique (R, C) sur la structure support, dans lequel la structure support s'étend au moins partiellement autour des moyens formant levier, dans un plan sensiblement parallèle à l'axe (P) dudit mouvement de pivotement ;
un élément chauffant en mode écriture (36, 47, 56, 73), prévu sur les moyens formant levier dans le premier chemin de courant ;
un embout de lecture/écriture (37, 57, 74, 84), prévu sur l'élément chauffant en mode écriture ;
un premier élément de capteur de proximité (91a, 91b, 92a, 92b), prévu sur une partie de la structure support autour des moyens formant levier ; et
un deuxième élément formant capteur de proximité (90, 93), prévu sur les moyens formant levier et disposé sur le premier élément de capteur de proximité, de manière que la distance entre les premier et deuxième éléments de capteur de proximité varie avec le mouvement de pivotement des moyens formant levier ;
dans lequel au moins l'un des moyens formant levier et de la structure support fournit un deuxième chemin de courant pour couplage des lignes d'alimentation (R, C) via les premier et deuxième éléments de capteur de proximité.

25. Un appareil de lecture/écriture (22) pour un dispositif de stockage de données (20), l'appareil comprenant une matrice (22) de composants de lecture/écriture, tel que revendiqué à la revendication 24, une ligne d'alimentation de chaque composant étant une ligne d'alimentation de colonne (R) commune à la totalité des composants situés dans la même ligne de la matrice, et l'autre ligne d'alimentation de chaque composant étant une ligne d'alimentation de colonne (C), commune à la totalité des composants dans la même colonne de la matrice (22).

26. Un dispositif de stockage de données (20) comprenant :
un support de stockage de données (21) ;
un appareil de lecture/écriture (22), tel que revendiqué à la revendication 25, l'appareil étant susceptible d'être positionné par rapport à une surface du support de stockage de données (21), de manière que l'embout de lecture/écriture de chaque composant de la matrice soit sollicité contre la surface ; et
des moyens d'alimentation en puissance (25), susceptibles de fonctionner en un mode en écriture et en un mode en lecture, pour appliquer un potentiel sur les lignes d'alimentation de chaque composant ;
dans lequel ladite surface du support de stockage de données (21) est telle que, en utilisation, un transfert de chaleur, se faisant de l'élément chauffant de mode en écriture à l'application d'un potentiel de mode en écriture sur les lignes d'alimentation (R, C) d'un dit composant, provoque la fusion locale de la surface, permettant la pénétration de l'embout de lecture/écriture pour former un cratère.

27. Dispositif de détection (115) pour un microscope à force atomique, le dispositif comprenant :
des moyens formant levier (116) et un structure support (117), les moyens formant levier étant connectés à la structure support, pour produire essentiellement un mouvement de pivotement, et la structure support (117) s'étendant au moins partiellement autour des moyens formant levier (116), dans un plan sensiblement parallèle à l'axe (P) dudit mouvement de pivotement ; et
un embout de détection (122) prévu sur les moyens formant levier (116), de manière que l'interaction des forces atomiques, entre l'embout (122) et un échantillon (14), explorée de cette manière, en utilisation, provoque ledit mouvement de pivotement desdits moyens formant levier ;
dans lequel une partie (125, 90, 93) des moyens formant levier (116) s'étend sur une partie de la structure support (117) autour des moyens formant levier, de manière que la distance (G) entre lesdites parties varie avec ledit mouvement de pivotement, de manière que la topographie d'un échantillon (14) exploré par l'embout, en utilisation, soit indiquée par des variations de ladite distance (G).

28. Un microscope à force atomique, comprenant :
un dispositif de détection (115) tel que revendiqué à la revendication 27) ;
un support d'échantillon (15), pour supporter un échantillon (14) en une position pour être exploré par l'embout de détection (122) ;
des moyens (16), pour effectuer un mouvement relatif dans le support d'échantillon (15) et le dispositif de détection (115), pour explorer l'échantillon (14) par l'embout (122) ; et
des moyens (25), pour détecter des variations de ladite distance (G) durant l'exploration d'un échantillon, pour fournir un signal de sortie indicatif de la topographie de l'échantillon.
